# EUROPEAN PATENT APPLICATION

(11) **EP 4 570 715 A1**
(43) Date of publication of application: **18.06.2025**
(21) Application number: 23865474.3
(22) Date of filing: 11.09.2023
(51) Int. Cl.: B65G 47/14, B23P 19/06

(54) **INSERT ALIGNMENT DEVICE, AND INSERT INSERTION METHOD USING INSERT ALIGNMENT DEVICE**

(30) Priority: 15.09.2022 JP 2022147370; 28.08.2023 JP 2023138147
(71) Applicant: Sanyu Seiki Corporation, Tokyo 169-0074 (JP)
(72) Inventor: GOTO Tamaki, Tokyo 169-0074 (JP)
(74) Representative: Grünecker Patent- und Rechtsanwälte PartG mbB
(86) International application number: PCT/JP2023/033039
(87) International publication number: WO 2024/058121

(57) **Abstract**

There are provided an insert alignment device and an insert insertion method using the insert alignment device, which are capable of preventing co-rotation of an insert during mounting and reliably mounting the insert on an insert inserting tool while eliminating a risk when the insert is mounted on the insert inserting tool. Provided are an upper surface (11) in which an alignment hole (111) for aligning an insert (I) is formed, and a co-rotation prevention member (13) that is disposed on a lower layer of the upper surface (11) and comes into contact with an entire periphery of one end of the insert (I) entered into an inner side of the alignment hole (111).

## Description

### Technical Field

Embodiments of the present invention relate to an insert alignment device and an insert insertion method using the insert alignment device.

### Background Art

In general, in a case where a strong female screw is required, for example, in a case where durability of a female screw is required or in a case where strong tightening is needed, an insert called a coil insert, a screw insert, or the like is used. The insert is formed by winding a wire such as stainless steel in a coil shape, and is screwed and inserted (embedded) into a tapped hole (screw hole) of a workpiece such as a resin or an aluminum alloy by an insert inserting tool.

A tang that is bent in a radial direction of the coil is formed at an end portion of the insert, for example. In a case where the insert with a tang is inserted into the tapped hole, the user uses the insert inserting tool to pinch the tang with the tip portion of the insert inserting tool or to hook the tip portion of the insert inserting tool on the tang. Then, in this state, the insert is rotated through the tang to be screwed into the tapped hole.

As described above, the tang is used when the insert is inserted into the tapped hole, and is unnecessary after the insert is inserted. When the tang remains, the tang may hinder the entry of the male screw during tightening. Thus, it is necessary to fold and remove the tang after the insertion of the insert.

On the other hand, there is also an insert in which the tang is not formed so that the tang does not need to be bent after the insert is inserted. In a case where an insert (such an insert is appropriately referred to as a "tang-less insert" below) in which such a tang is not formed is screwed into the tapped hole, the tang-less insert is rotated by hooking a claw provided at the tip portion of the insert inserting tool to a notch formed at an end portion of the tang-less insert.

Specifically, in a case where a tool for attaching a tang-less spiral coil insertion body (tang-less insert) disclosed in PTL 1 is used, an operator inserts the tang-less insert into a workpiece by rotating a crank handle provided at an end portion on a side opposite to an end portion on which the tang-less insert is mounted.

### Citation List

### Patent Literature

PTL 1: JP S 60-191774 A

### Summary of Invention

### Technical Problem

However, in a case where there are a large number of tapped holes formed in the workpiece, the number of tang-less inserts screwed into the tapped holes is also naturally large. Then, in some cases, the number of tang-less inserts to be screwed by the workpiece exceeds 100, and screwing all of the tang-less inserts by handwork of the operator is very laborious. In order to avoid such inconvenience, in recent years, an attachment tool for screwing a tang-less insert into a tapped hole has been electrified to reduce the labor of an operator.

Here, regardless of whether the attachment tool is manual or electric, it is necessary to mount the insert on the tip of the attachment tool (mandrel) in advance in order to screw the insert into the workpiece. In a case of the manual attachment tool, the insert was mounted on the attachment tool in a manner that the operator rotates either the mandrel or the insert by hand.

On the other hand, in a case of the electric attachment tool, the operator holds the insert with one hand and brings the mandrel of the electric attachment tool held with the other hand into contact with the end portion of the insert to rotate the mandrel, whereby the insert is mounted on the mandrel. Then, during the rotation of the mandrel, the operator needs to hold the insert. This is because, when the insert is not held, co-rotation that the insert is also rotated with the rotation of the mandrel occurs.

As described above, in order to prevent the co-rotation of the insert, the insert is to be held, but the mandrel rotates in close proximity to the hand of the operator who holds the insert. Therefore, in some cases, the hand holding the insert does not come into contact with the mandrel. In addition, in a case where the insert is held in a state in which a glove is worn, it is also conceivable that the glove is caught by the mandrel that rotates in a case of mounting the insert.

Although the insert has a plurality of sizes, as the size of the insert is smaller, the position of the hand holding the insert and the position of the rotating mandrel become closer to each other when the insert is mounted on the electric attachment tool. Therefore, there is a concern that the hand and the mandrel may come into contact with each other.

The present invention provides an insert alignment device and an insert insertion method using the insert alignment device, which are capable of preventing co-rotation of an insert during mounting and reliably mounting the insert on an insert inserting tool while eliminating a risk when the insert is mounted on the insert inserting tool.

In addition, there are provided an insert alignment device and an insert insertion method using the insert alignment device, which are capable of easily performing the number management and the insertion management of inserts in a case where a large number of the inserts are inserted into a workpiece.

### Solution to Problem

According to an embodiment of the present invention, an insert alignment device includes an upper surface in which an alignment hole for aligning an insert is formed, and a co-rotation prevention member that is disposed on a lower layer of the upper surface and comes into contact with an entire periphery of one end of the insert entered into an inner side of the alignment hole.

The co-rotation prevention member in the insert alignment device is formed of an elastomer, and an accommodation portion configured to accommodate a tip portion of an insert inserting tool inserted into the alignment hole in order to mount the insert is formed in the co-rotation prevention member.

A distance from a front surface of the alignment hole of the insert alignment device on the upper surface to a surface on which the upper surface and the co-rotation prevention member are in contact with each other is set for each type of the insert as an alignment target.

A wall that prevents falling of the insert put in from the upper surface when the insert is put in for alignment is provided around the upper surface of the insert alignment device. In addition, the upper surface and the co-rotation prevention member are formed to be inclinable when the excess insert that has not been entered into the alignment hole is discharged.

A portion of the wall of the insert alignment device is formed to be an opening portion when the excess insert is discharged, or the entire wall is formed to be slidable along the front surface of the upper surface when the excess insert is discharged.

The upper surface of the insert alignment device and the co-rotation prevention member constitute a co-rotation prevention cartridge, and the co-rotation prevention cartridge is formed to be detachably attachable to the insert alignment device. Then, the co-rotation prevention cartridge further includes an adjustment plate that is a lower layer of the co-rotation prevention member and sandwiches the co-rotation prevention member between the adjustment plate and the upper surface.

In the co-rotation prevention cartridge, a distance from the upper surface to the adjustment plate is constant regardless of how far a distance from the front surface of the upper surface to the co-rotation prevention member is set according to the type of the insert. In addition, a fixing portion that protrudes toward a side opposite to a side on which the co-rotation prevention member is disposed is formed in the adjustment plate.

The co-rotation prevention cartridge is mounted on a cartridge reception portion such that the adjustment plate has a position facing a lower surface disposed at an upper portion of a base portion of the insert alignment device, the cartridge reception portion being formed between the lower surface and a wall provided for preventing falling of the insert put in from the upper surface when the insert is put in for alignment.

According to an embodiment of the present invention, an insert insertion method using an insert alignment device includes: putting an insert into the insert alignment device; aligning the insert by entering the put-in insert into an alignment hole; discharging the insert that is aligned and is in excess from the insert alignment device; mounting the aligned insert on an insert inserting tool; and inserting the mounted insert into a workpiece.

In the insert insertion method using the insert alignment device, in the step of mounting the insert on the insert inserting tool, the insert inserting tool mounts the insert to press the insert in a traveling direction of the insert inserting tool.

In the insert insertion method using the insert alignment device, in a step in which the insert inserting tool inserts the insert into the workpiece, the insert inserting tool reverses after an insertion time set for each type of the insert to be inserted has elapsed, and ends the insertion operation of the insert into the workpiece.

In addition, in the insert insertion method using the insert alignment device, in the step in which the insert inserting tool inserts the insert into the workpiece, the insert inserting tool reverses after inserting the insert into the workpiece by an insertion distance set in advance, and ends the insertion operation of the insert into the workpiece.

In the insert insertion method using the insert alignment device, the excess insert is discharged from the insert alignment device by opening a portion of a wall formed to surround the upper surface in which the alignment hole is formed in the insert alignment device when the insert alignment device is inclined.

In the insert insertion method using an insert alignment device, the excess insert is discharged from the insert alignment device in a manner that a wall formed to surround the upper surface in which the alignment hole is formed in the insert alignment device slides over the upper surface.

The insert insertion method using the insert alignment device further includes a step of mounting a co-rotation prevention cartridge according to a type of the insert mounted on the insert inserting tool, on a cartridge reception portion of the insert alignment device before the putting of the insert into the insert alignment device, in a case where an upper surface and the co-rotation prevention member constitute the co-rotation prevention cartridge and the co-rotation prevention cartridge is made to be detachably attached to the insert alignment device.

### Advantageous Effects of Invention

According to an insert alignment device and an insert insertion method using the insert alignment device in the embodiments of the present invention as described above, it is possible to prevent co-rotation of an insert during mounting and reliably mount the insert on an insert inserting tool while eliminating a risk when the insert is mounted on the insert inserting tool. In addition, it is possible to easily perform the number management and the insertion management of inserts when a large number of the inserts are inserted into the workpiece.

### Brief Description of Drawings

FIG. 1 is a plan view illustrating an overall configuration of an insert insertion system according to an embodiment of the present invention;
FIG. 2 is a perspective view illustrating an insert alignment device according to a first embodiment of the present invention;
FIG. 3 is a cross-sectional view taken along line A-A of the insert alignment device according to the embodiment of the present invention illustrated in FIG. 2;
FIG. 4 is a plan view illustrating a state in which a sealing member is attached to the insert alignment device in the embodiment of the present invention;
FIG. 5 is a plan view illustrating a state in which another sealing member is attached to the insert alignment device in the embodiment of the present invention;
FIG. 6 is a perspective view illustrating a state in which an alignment portion is inclined from a base portion in the insert alignment device according to the first embodiment of the present invention;
FIG. 7 is a flowchart illustrating a flow of an insert insertion method using the insert alignment device according to the embodiment of the present invention;
FIG. 8 is a plan view illustrating a state in which an insert is put into the insert alignment device in the insert insertion method using the insert alignment device according to the embodiment of the present invention;
FIG. 9 is a plan view illustrating a state in which an excess insert is discharged from the insert alignment device in the insert insertion method using the insert alignment device according to the first embodiment of the present invention;
FIG. 10 is a perspective view illustrating a state in which the insert aligned by the insert alignment device is mounted on an insert inserting tool in the insert insertion method using the insert alignment device according to the embodiment of the present invention;
FIG. 11 is a perspective view illustrating a state in which the insert mounted on the insert inserting tool is inserted into a workpiece in the insert insertion method using the insert alignment device according to the embodiment of the present invention;
FIG. 12 is a perspective view illustrating an insert alignment device according to a second embodiment of the present invention;
FIG. 13 is a plan view illustrating a state in which an insert is put into the insert alignment device according to the second embodiment of the present invention;
FIG. 14 is a plan view illustrating a state in which an excess insert is discharged from the insert alignment device according to the second embodiment of the present invention;
FIG. 15 is a perspective view illustrating an insert alignment device according to a third embodiment of the present invention;
FIG. 16 is a plan view illustrating the insert alignment device according to the third embodiment of the present invention;
FIG. 17 is a perspective view illustrating a state in which a co-rotation prevention cartridge is removed from the insert alignment device according to the third embodiment of the present invention;
FIG. 18 illustrates the co-rotation prevention cartridge according to the third embodiment of the present invention, in which (A) is a plan view and (B) is a cross-sectional view taken along line B-B of the plan view;
FIG. 19 is a cross-sectional view taken along line C-C of the insert alignment device according to the third embodiment of the present invention illustrated in FIG. 15;
FIG. 20 is a cross-sectional view taken along line D-D of the insert alignment device according to the third embodiment of the present invention illustrated in FIG. 17; and
FIG. 21 illustrates a cross-sectional view of a co-rotation prevention cartridge according to a third embodiment of the present invention, in which (A) is a cross-sectional view of the co-rotation prevention cartridge described above, and (B) is a cross-sectional view of a state where thicknesses of an upper surface and an adjustment plate in the co-rotation prevention cartridge are changed.

### Description of Embodiments

### (First Embodiment)

Hereinafter, embodiments of the present invention will be described in detail with reference to the drawings.

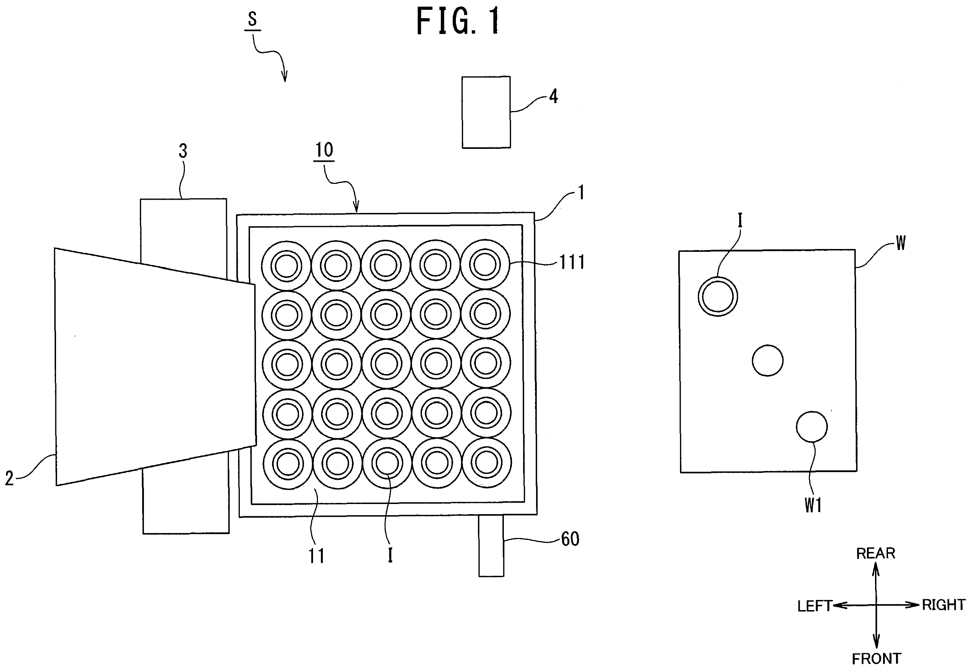

FIG. 1 is a plan view illustrating an overall configuration of an insert insertion system S according to an embodiment of the present invention. The insert insertion system S includes an insert alignment device 1, a feeder 2, a recovery device 3, and an insert inserting tool 4. The feeder 2 puts the insert into the insert alignment device 1. The recovery device 3 receives the excess insert discharged from the insert alignment device 1. The insert inserting tool 4 mounts the insert in the insert alignment device 1 and inserts the insert into a designated place of a workpiece W.

As described above, there are two types of inserts, that is, an insert with a tang and a tang-less insert. In the following description, it is assumed that the insert used in the insert insertion system S in the embodiment of the present invention is a tang-less insert. However, an insert with a tang can also be used.

The insert alignment device 1 is used to align an insert I in order to mount the insert I on an insert inserting tool 4. Therefore, a plurality of tang-less inserts are put into the insert alignment device 1 from the feeder 2.

The number of inserts I to be put into the insert alignment device 1 from the feeder 2 is at least the number of pieces to be aligned. Further, it is preferable that the number of inserts I to be put is a number that is significantly larger than the number of pieces to be aligned. For example, 25 alignment holes 111 are formed on the upper surface 11 of the insert alignment device 1 illustrated in FIG. 1 as the number of pieces to be aligned. Therefore, in this case, the number of inserts I to be aligned is 25, and thus the number of inserts I to be input into the insert alignment device 1 is 25 or more. On the other hand, the number of inserts I is, for example, a number that does not overflow from the upper surface 11 of the insert alignment device 1.

Here, the number of pieces to be aligned is, for example, the number of alignment holes 111 formed in the upper surface 11 of the insert alignment device 1. Alternatively, in a case where the number of the alignment holes 111 formed using a sealing member which will be described later is adjusted, the number of the alignment holes 111 is the adjusted number.

In addition, in a case where the insert I is put into the insert alignment device 1, for example, the operator may directly put the insert I into the insert alignment device 1 without using a mechanism such as the feeder 2.

The recovery device 3 that receives the excess insert I discharged from the insert alignment device 1 is disposed adjacent to the insert alignment device 1 and directly below the feeder 2. The recovery device 3 can hold the excess insert I discharged from the insert alignment device 1. Alternatively, a mechanism that joins the recovery device 3 and the feeder 2 and sends the excess insert I recovered by the recovery device 3 to the feeder 2 again may be provided.

The insert inserting tool 4 mounts the insert I aligned in the insert alignment device 1 on the tip of the mandrel and moves in the right-left direction, the front-rear direction, or the up-down direction of the insert insertion system S as illustrated in FIG. 1. Then, the insert I mounted in the tapped hole W1, which is the designated place of the workpiece W, is inserted.

Further, the insert inserting tool 4 used in the embodiment of the present invention is driven based on power and the operator does not insert the insert I into the workpiece W. Note that, as long as the driving is performed based on the power, it does not matter what is used as the power source, such as an electric type or an engine type.

In addition, a detailed structure of the insert inserting tool 4 will not be described here, but the insert inserting tool 4 is generally used when the insert is inserted into the workpiece W. The mandrel for inserting the insert I into the tapped hole W1 is provided at the tip of the insert inserting tool 4, and a claw for hooking the notch of the tang-less insert is formed at the tip of the mandrel. The claw is generally in a state of protruding outward from the outer diameter of the mandrel by a biasing member.

That is, when the tang-less insert is inserted into the tapped hole, first, the tip of the mandrel comes into contact with the other end of the tang-less insert. In this case, the claw is pushed into the inner diameter of the tang-less insert. Then, during a period in which the tang-less insert is mounted on the mandrel, the claw moves while being in contact with the inner diameter of the tang-less insert, and, when the claw reaches a portion of the notch of the tang-less insert, the claw protrudes by the biasing member and is hooked by the notch. As a result, the tang-less insert is fixed to the mandrel and is mounted.

Furthermore, a control device for controlling the driving of the insert inserting tool 4 is provided inside or outside the insert inserting tool 4. When the insert inserting tool 4 inserts the insert I into the workpiece W, the insert inserting tool 4 used in the insert insertion system S in the embodiment of the present invention controls the insertion based on an insertion time or an insertion distance. That is, it is conceivable that, when the insert inserting tool 4 inserts the insert I into the workpiece W, a portion of the insert inserting tool 4 comes into contact with the front surface of the workpiece W.

However, in some industries, scratches (abrasions) or the like on the front surface of the workpiece W may be undesirable. In such a case, for example, when control is performed to detect that a portion of the insert inserting tool 4 is in contact with the front surface of the workpiece W and to end the insertion of the insert I, it is not possible to avoid the scratches.

Therefore, in the control of the insert inserting tool 4 in the embodiment of the present invention, the insertion time is determined in advance for each type of the insert I in advance. Then, in a case where a predetermined insertion time has elapsed from the start of the insertion, the rotation of the mandrel is reversed during the insertion of the insert I, and the insertion of the insert I into the workpiece W is ended.

Alternatively, as a method of controlling the insert inserting tool 4 in the embodiment of the present invention, it is also conceivable to perform control based on the insertion distance instead of the insertion time. That is, in a case where a contact position of one end portion of the insert I with the workpiece W is set as a reference position when the insert I is inserted into the workpiece W, a detection signal from a detection sensor that detects a distance at which the insert I is inserted into the workpiece W from the reference position is acquired. Then, a method of ending the insertion operation of the insert I into the workpiece W in a case where it is determined that the insertion distance set in advance is reached may be adopted.

By controlling the insert inserting tool 4 based on any one of the insertion time and the insertion distance as described above, it is possible to effectively prevent scratches (abrasions) or the like from being made on the front surface of the workpiece W when the insert I is inserted into the workpiece W.

The workpiece W is a target into which the insert I is inserted. In FIG. 1, for example, three tapped holes W1 are formed in the workpiece W, and inserts I are inserted into the tapped holes W1. In the workpiece W illustrated in FIG. 1, the insert I is inserted into one of three formed tapped holes W1. The diameter of the tapped hole W1 is smaller than the diameter of the insert I.

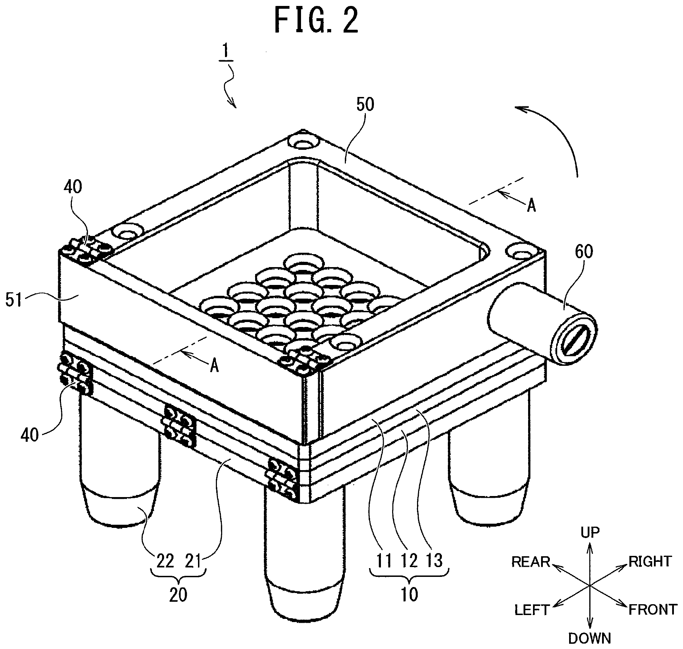

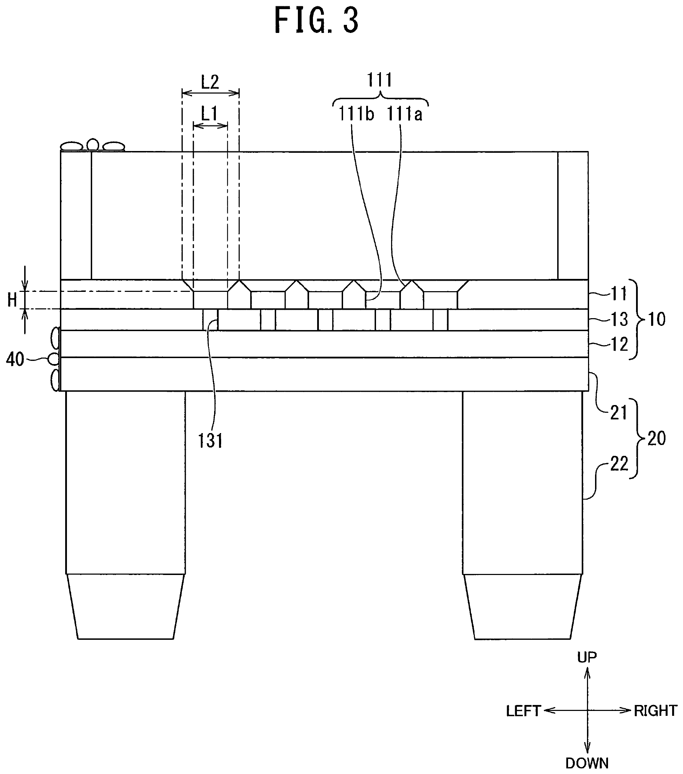

Next, the insert alignment device 1 in the embodiment of the present invention will be described in more detail. FIG. 2 is a perspective view illustrating the insert alignment device 1 according to the embodiment of the present invention. In addition, FIG. 3 is a cross-sectional view taken along line A-A of the insert alignment device 1 according to the embodiment of the present invention illustrated in FIG. 2.

As described above, the insert alignment device 1 in the embodiment of the present invention is used for aligning the insert I in order to mount the insert I on the mandrel tip of the insert inserting tool 4.

As illustrated in FIG. 2 or FIG. 3, the insert alignment device 1 includes an alignment portion 10 that aligns the insert I and a base portion 20 that supports the alignment portion 10. The alignment portion 10 is further divided into three layers, and includes an upper surface 11, a lower surface 12, and a co-rotation prevention member 13.

The upper surface 11 includes an alignment hole 111 for aligning the insert I. The lower surface 12 serves as a base that supports the upper surface 11 and the co-rotation prevention member 13 to be described next. In addition, the co-rotation prevention member 13 is interposed between the upper surface 11 and the lower surface 12, and prevents the insert I from rotating when the insert I is mounted on the mandrel of the insert inserting tool 4.

As illustrated in FIG. 2 or FIG. 3, a plurality of alignment holes 111 for aligning the inserts I put into the upper surface 11 of the insert alignment device 1 are formed in the insert alignment device 1. The alignment hole 111 is a hole formed for aligning the insert I. By entering the insert I into the alignment hole 111, the insert I is aligned to be mountable on the insert inserting tool 4.

That is, in the insert alignment device 1 in the embodiment of the present invention, the insert I is aligned by entering the alignment hole 111 to be upright in the up-down direction in the insert alignment device 1. Note that, hereinafter, an end portion of the insert I located on the inner side of the alignment hole 111 among inserts I that have entered into the alignment hole 111 is referred to as one end, and an end portion of the insert I located on the opposite side is referred to as the other end.

In addition, since the insert I that does not enter into the alignment hole 111 is recovered in the recovery device 3 as described above, the number of alignment holes 111 indicates the number of aligned inserts I. Thus, the alignment hole 111 also has a function of managing the number of inserts I.

The alignment hole 111 is formed to penetrate the upper surface 11 in the up-down direction. Then, a tapered portion 111a is formed on a surface (this surface is referred to as a "front surface" below) opposite to a surface on which the upper surface 11 and the co-rotation prevention member 13 are in contact with each other. The reason why the front surface portion of the alignment hole 111 is formed in a tapered shape is to easily enter the insert I put into the alignment portion 10 into the alignment hole 111.

As illustrated in FIG. 3, one end of the tapered portion 111a is continuous to the front surface of the upper surface 11, and the other end of the tapered portion 111a is continuous to a storage portion 111b into which the insert I actually enters. Then, the storage portion 111b is formed to penetrate the upper surface 11 until the storage portion 111b comes into contact with the co-rotation prevention member 13 in the up-down direction.

Note that the inclination of the tapered portion 111a may be the same regardless of the type of the insert I. Alternatively, in order to more easily enter the insert I into the alignment hole 111, for example, the change may be performed for each type of insert I.

The diameter of the storage portion 111b in the circumferential direction is formed to be a value slightly larger than the diameter of the insert I as a mounting target. This is to avoid difficulty in mounting the insert I on the insert inserting tool 4 when the insert I is mounted on the insert inserting tool 4. That is, when the diameter of the storage portion 111b is considerably larger than the diameter of the insert I, the insert I is largely moved in the storage portion 111b due to the rotation of the mandrel when the insert I is mounted on the insert inserting tool 4.

Therefore, a diameter L1 in the circumferential direction of the storage portion 111b illustrated in the cross-sectional view of FIG. 3 is larger than the diameter of the insert I as a mounting target. Then, a diameter L2 of one end of the tapered portion 111a in contact with the front surface of the upper surface 11 is a value larger than the diameter L1. Note that the diameter of the other end of the tapered portion 111a is the same as the diameter L1 in the circumferential direction of the storage portion 111b.

Since the diameter L2 of one end of the tapered portion 111a is formed to be larger than the diameter L1 of the storage portion 111b, the insert I is easily inserted into the alignment hole 111 for alignment as described above.

In addition, the length of the storage portion 111b in the up-down direction is determined in accordance with the length of the insert I as a mounting target in the longitudinal direction before the mounting. This is because, when the length of the storage portion 111b in the up-down direction is too long (too deep) compared to the length of the insert I in the longitudinal direction, the insert inserting tool 4 cannot mount the insert I. Therefore, the length (height) H of the upper surface 11 in the up-down direction varies depending on the type of the insert I, and is formed to have a length corresponding to each insert I.

Therefore, the size of each portion of the alignment hole 111 varies depending on the type of the insert I, in addition to the fact that the diameter of the insert I varies depending on the type of the insert I as described above. Therefore, the alignment portion 10 is prepared for each type of insert I.

Then, by detaching a hinge 40 and selecting and attaching the alignment portion 10 prepared for each type of insert I, the base portion 20 can be left as it is, and the insert alignment device 1 that can correspond to various types of inserts I can be obtained.

Note that, as described above, instead of replacing the entire alignment portion 10, a plurality of the upper surfaces 11 produced for each type of insert I, or a plurality of combinations of the upper surfaces 11 and the co-rotation prevention members 13 can be prepared, and an appropriate upper surface 11 can be selected according to the type of insert I to be used and fitted to the alignment portion 10. In this manner, the operation can be more reasonably performed than replacing the entire alignment portion 10 by making only the upper surface 11 as a replacement target. Note that an aspect of this point will be described again in the description of the embodiment.

As described above, in the insert alignment device 1 in the embodiment of the present invention, a total of 25 alignment holes 111 of five rows in the front-rear direction and five columns in the right-left direction are formed. Therefore, the number of inserts I aligned in the insert alignment device 1 is 25.

However, the number of inserts I to be aligned can be freely set. That is, the number of the alignment holes 111 provided on the upper surface 11 is not limited to 25 and can be set to various numbers and formed. In addition, the number of alignment holes 111 can be set by another method.

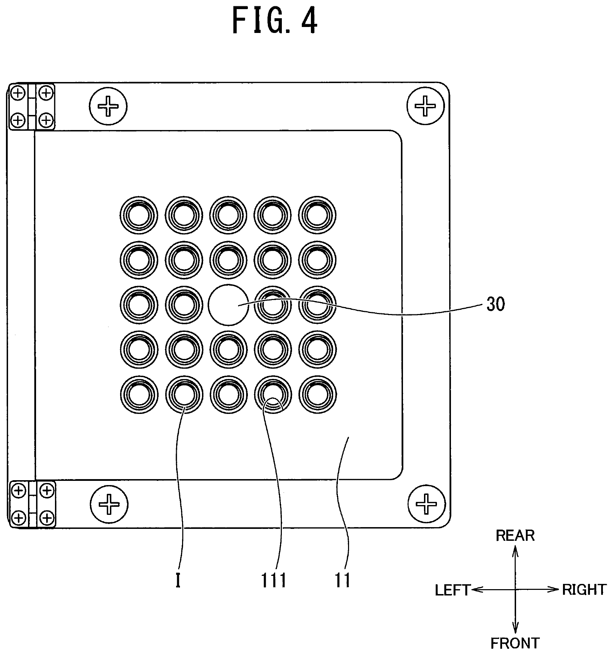

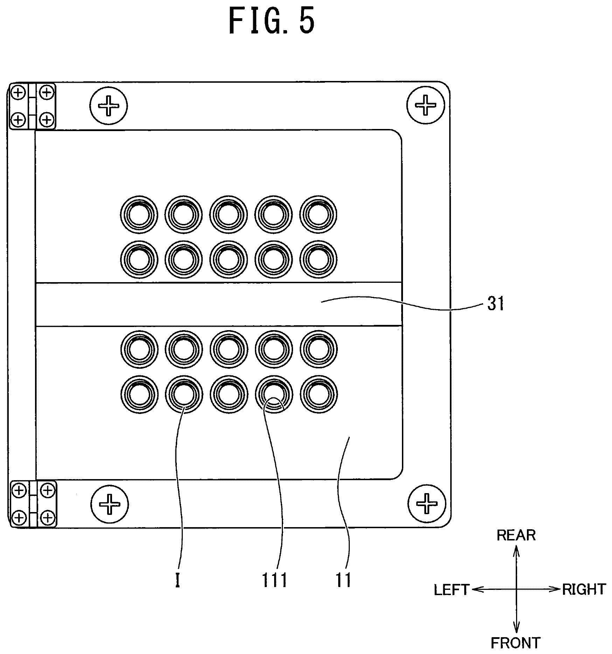

FIG. 4 is a plan view illustrating a state in which a sealing member 30 is attached to the insert alignment device 1 in the embodiment of the present invention. In addition, FIG. 5 is a plan view illustrating a state in which another sealing member 31 is attached to the insert alignment device 1 in the embodiment of the present invention. Note that, in FIGS. 4 and 5, the illustration of a gripping portion 60 is omitted.

The sealing member 30 illustrated in FIG. 4 is formed to be able to block one alignment hole 111. Therefore, the alignment hole 111 has a shape that can be fitted into one alignment hole 111, for example, a cap shape. The sealing member 30 illustrated in FIG. 4 can block only one alignment hole 111 due to the shape of the sealing member 30. However, for example, a plurality of sealing members 30 may be joined to each other so that the alignment holes 111 can be blocked by the number of joined sealing members 30.

FIG. 4 illustrates a state in which the insert I is entered into each alignment hole 111 of the insert alignment device 1 and aligned. Then, 25 alignment holes 111 are formed, and the sealing member 30 is fitted into the central alignment hole 111. Therefore, the insert I does not enter into the alignment hole 111 into which the sealing member 30 is fitted. As a result, 25 alignment holes 111 are formed, but the number of inserts I that are aligned is 24.

In addition, as in the sealing member 31 illustrated in FIG. 5, the sealing member may be formed in, for example, a plate shape and may be able to collectively block, for example, one row of the alignment holes 111 provided in the upper surface 11. In a case of the sealing member 31, the sealing member 31 is fixed by a fixing portion (not illustrated) so that the sealing member 31 does not move while the plurality of inserts I are put into the insert alignment device 1 and aligned in the alignment holes 111.

In the insert alignment device 1 illustrated in FIG. 5, a total of 25 alignment holes 111 of five rows in the front-rear direction and five columns in the right-left direction are also formed, and the sealing member 31 is disposed to block all the columns in the third row in the front-rear direction. By disposing such a sealing member 31 in the alignment hole 111, the number of inserts I to be aligned is 20.

By using the sealing member that can adjust the number of alignment holes 111 formed in the insert alignment device 1 to any number as described above, even in a case where the number of inserts I to be used as a unit varies depending on the country, region, or industry in which the insert alignment device 1 is used, it is possible to perform flexible handling. Therefore, it is possible to further improve the general-purpose properties of the insert alignment device 1.

Next, the lower surface 12 will be described. The lower surface 12 serves as a base that supports the upper surface 11 and the co-rotation prevention member 13 to be described next. In addition, the lower surface 12 is disposed at a position facing a placement surface 21 of the base portion 20, and the co-rotation prevention member 13 is interposed between the lower surface 12 and the upper surface 11.

Then, in the insert alignment device 1 in the embodiment of the present invention, for example, as illustrated in FIG. 1, the lower surface 12 is joined to the placement surface 21 by the hinge 40. By joining the lower surface 12 and the placement surface 21 at such a position, as described above, the entire alignment portion 10 can be inclined with the front-rear direction of the insert alignment device 1 as a rotation axis in the portion of the hinge 40.

Note that the lower surface 12 and the upper surface 11 can be formed by using various materials such as a metal material and a resin material. In addition, the upper surface 11 and the lower surface 12 may be made of different materials.

In addition, the colors of the materials of the upper surface 11 and the lower surface 12 can be freely selected. However, it is preferable that the upper surface 11 is formed with a color different from the color of the insert I as an alignment target, so that it is possible to distinguish whether or not the insert I is entered into the alignment hole 111. In addition, in a case where the color of the upper surface 11 is selected in relation to the color of the insert I as the alignment target, the entire upper surface 11 may have the same color, or the color of only the front surface of the upper surface 11 may be different from the color of the insert I.

Further, for example, the front surface of the insert alignment device 1 may be processed to be smooth, so that the put-in insert I is easily entered into each alignment hole 111 or the insert I is not hooked on the front surface of the upper surface 11 when the excess insert I is discharged to the outside of the insert alignment device 1. In addition, by adopting a different material only for the front surface of the upper surface 11, smoothness may be secured.

The co-rotation prevention member 13 is used for easily and reliably mounting the insert I on the insert inserting tool 4. Therefore, the co-rotation prevention member 13 is formed of an elastomer. Therefore, for example, a material such as polypropylene can be adopted, but more suitably, a rubber member can be adopted. Since the co-rotation prevention member 13 is formed of an elastomer, the co-rotation of the insert I can be prevented when the co-rotation prevention member 13 is mounted on the mandrel with the insert I.

That is, according to the relationship between the sizes of the alignment hole 111 and the insert I described above, in a state where the insert I is entered into the alignment hole 111 and remains aligned, the insert I is not subjected to any force, and the insert I can be freely moved in the alignment hole 111.

However, when the insert I is inserted into the insert inserting tool 4, the insert I is also rotated together with the mandrel in accordance with the rotation of the mandrel when the insert I to be mounted is not fixed during the rotation of the mandrel.

Therefore, it is necessary to fix the insert I so that the insert I does not rotate during the operation of mounting the insert I on the insert inserting tool 4. Thus, in the insert alignment device 1 in the embodiment of the present invention, the co-rotation prevention member 13 as described above is provided. The specific actions are as follows.

In a case where the insert I is in a state of being entered and aligned in the alignment hole 111, the other end of the insert I is located on the front surface side of the upper surface 11, and one end of the insert I is disposed on the inner side of the alignment hole 111. Then, as described above, the alignment hole 111 is formed to penetrate the upper surface 11 in the up-down direction, and the upper surface 11 is in contact with the co-rotation prevention member 13 on the inner side of the alignment hole 111. Therefore, one end of the insert I entered into the alignment hole 111 is in contact with the co-rotation prevention member 13.

In such a state, the tip of the mandrel comes into contact with the other end of the insert I disposed on the front surface side of the upper surface 11, and the mounting of the insert I on the insert inserting tool 4 is started.

That is, the rotating mandrel is inserted from the front surface side of the upper surface 11 toward the lower surface 12 side, and the tip of the mandrel first comes into contact with the other end of the insert I. Thereafter, the insert I is mounted on the mandrel so that the insert inserting tool 4 is pressed downward.

The insert I is mounted on the mandrel in a manner that the mandrel advances the alignment hole 111 in the downward direction while rotating. In this case, since a force toward the lower side of the mandrel (insert inserting tool 4) is applied to the insert I, one end of the insert I is pressed on the co-rotation prevention member 13 in a state where a force is applied.

Since the co-rotation prevention member 13 is made of the above-described material, the rotation of the insert I caused by the rotation of the mandrel is suppressed by strongly pressing one end of the insert I against the co-rotation prevention member 13, and it is possible to prevent co-rotation.

In addition, in some cases, it is conceivable that one end portion of the insert I may be embedded in the co-rotation prevention member 13. In such a state, the insert I can be more reliably fixed while the insert I is mounted on the insert inserting tool 4.

In the insert alignment device 1 in the embodiment of the present invention as described above, when the insert I is mounted on the insert inserting tool 4, one end of the insert I located on the inner side of the alignment hole 111 comes into contact with the co-rotation prevention member 13 and is fixed.

On the other hand, the diameter L1 of the alignment hole 111 is larger than the diameter of the insert I. Thus, while the insert inserting tool 4 mounts the insert I, the alignment hole 111 and the insert I do not generally come into contact with each other in the middle of the insertion direction of the insert I in the alignment hole 111. Therefore, when the insert inserting tool 4 mounts the insert I, the alignment hole 111 is not used for fixing the insert I in any region in the longitudinal direction in which the one end and the other end of the insert I are joined to each other.

In addition, an accommodation portion 131 that accommodates the tip of the mandrel inserted into the alignment hole 111 is formed in the co-rotation prevention member 13. After the mandrel of the insert inserting tool 4 enters into the alignment hole 111, the insert I gradually advances to the back of the alignment hole 111 while being wound (mounted) around the mandrel.

As described above, the insert I used in the embodiment of the present invention is a tang-less insert. In the case of the tang-less insert, a claw provided at the tip of the mandrel is hooked on a notch provided near one end portion of the tang-less insert. As described above, since the claw of the mandrel is hooked on the notch of the insert I, the insert I during insertion into the workpiece W can be held at the tip of the mandrel, and the insert I can be inserted into the tapped hole of the workpiece W while being rotated.

In order for the claw of the mandrel to be hooked on the notch of the insert I, the tip of the mandrel needs to sufficiently enter to the back of the alignment hole 111 and reach the notch of the insert I. However, when the claw is hooked on the notch, the tip of the mandrel is in a state of protruding from one end portion of the mounted insert I.

Here, when the co-rotation prevention member 13 is formed to block the alignment hole 111 on the surface on which the upper surface 11 and the co-rotation prevention member 13 are in contact with each other, the following disadvantages occur. That is, the tip of the mandrel is prevented from further entering the back of the alignment hole 111 by the co-rotation prevention member 13 before the claw of the mandrel is hooked on the notch formed near the end portion of the insert I.

Thus, in the insert alignment device 1 in the embodiment of the present invention, the accommodation portion 131 is provided in the co-rotation prevention member 13, and thus the tip of the mandrel can enter beyond one end portion of the insert I that is in contact with the co-rotation prevention member 13 at the bottom of the alignment hole 111. By forming the accommodation portion 131 for accommodating the tip of the mandrel in the co-rotation prevention member 13 as described above, the claw of the mandrel can be reliably hooked on the notch of the insert I when the insert I is mounted on the insert inserting tool 4.

Therefore, the accommodation portion 131 is formed to have a diameter larger than the diameter of the mandrel. Note that, as illustrated in FIG. 3, the accommodation portion 131 in the embodiment of the present invention is formed to penetrate the co-rotation prevention member 13 in the up-down direction. However, the accommodation portion 131 does not need to be formed to penetrate the co-rotation prevention member 13, and for example, the accommodation portion 131 can be formed to be a recess portion having a depth sufficient to accommodate the tip of the mandrel.

The base portion 20 includes a placement surface 21 on which the alignment portion 10 is placed, and legs 22 that are connected to the placement surface 21 and support the entire insert alignment device 1. Then, the base portion 20 is detached attachable to the alignment portion 10 by joining the placement surface 21 and the lower surface 12 to each other via the hinge 40.

As described above, the reason why the alignment portion 10 and the base portion 20 are detachably attachable to each other is that the alignment holes 111 differ depending on the size of the insert I as the alignment target, and thus it is necessary to replace the alignment portion 10 depending on the type of the insert I.

In addition, since only a portion of the alignment portion 10 and the base portion 20 is joined by the hinge 40 as described above, the alignment portion 10 can be lifted and inclined toward the hinge 40 side with the hinge 40 as a base point in the direction of the arrow in FIG. 2. By lifting and inclining the alignment portion 10 from the base portion 20 as described above, the excess insert I that does not enter into the alignment hole 111 among the put-in inserts I can be discharged to the outside of the alignment portion 10.

Then, the excess insert I discharged from the insert alignment device 1 is recovered by the recovery device 3. Therefore, a distance from the end portion of the leg 22 installed on a worktable in a case where the insert alignment device 1 is placed on the worktable, for example, the worktable to the surface of the placement surface 21 facing the lower surface 12 is set in relation to the disposition position of the recovery device 3.

Note that the size of the placement surface 21 is formed to be substantially the same as the size (area) of the lower surface 12 of the alignment portion 10 in the insert alignment device 1 in the embodiment of the present invention. However, the size of the placement surface 21 can be freely set as long as the alignment portion 10 can be reliably placed.

In addition, the four legs 22 are also provided in the insert alignment device 1 in the embodiment of the present invention. However, for example, the number and shape of the the four legs 22 can be freely set as long as the alignment portion 10 can be reliably supported.

As illustrated in FIGS. 2 and 3, a wall 50 is provided around the upper surface 11 of the insert alignment device 1. That is, since the insert alignment device 1 in the embodiment of the present invention is formed in a quadrangular shape, the wall 50 is also provided on four sides to be in contact with the upper surface 11 and to surround the upper surface 11.

The wall 50 prevents the put-in insert I from falling from the upper surface 11 when the insert I is put in for alignment. Therefore, the length (height) of the wall 50 in the up-down direction is sufficient as long as the insert I does not fall outside the insert alignment device 1 at the time of the putting-in or after the putting-in, and can be set to any value.

In addition, the wall 50 is fixed to the upper surface 11 by inserting a fixing tool (not illustrated) into a fixing hole 50a that penetrates downward from the upper portion of the wall 50. As the fixing tool, for example, a screw can be used. In addition, it is sufficient that the fixing hole 50a reaches at least the upper surface 11, and the fixing hole 50a may be formed to reach the lower surface 12 and be integrally fixed to the alignment portion 10. In addition, the number of fixing places is not limited to four places as illustrated in FIG. 2.

A portion of the wall 50 of the insert alignment device 1 in the first embodiment of the present invention is formed as an opening wall 51 that serves as an opening portion when the excess insert I is discharged. Then, the insert alignment device 1 is inclined, thereby opening the opening wall 51. In addition, the opening portion O is formed between the opening wall 51 and the other walls constituting the wall 50.

Specifically, the opening wall 51 is provided on one side of four sides constituting the wall 50. Thus, the opening wall 51 is formed of a separate member different from the other three sides. That is, three sides are formed in a U-shape, and the remaining one side closes the open portion in a U-shape. Then, the upper portion of one side as the opening wall 51 and the upper portions of the two sides in contact with the one side are joined to each other by the hinge 40. By adopting such a structure, in a case where the alignment portion 10 is inclined, the lower portion of the opening wall 51 that is not joined is opened, and forms an opening portion O.

In addition, the gripping portion 60 is provided on the wall 50 disposed on the front side in FIG. 2 among the three sides of the wall 50 that does not form the opening wall 51. The gripping portion 60 is used for inclining the alignment portion 10 in order to discharge the insert I that is put into the alignment portion 10 but does not enter into the alignment hole 111, and thus is excess to the outside of the insert alignment device 1.

That is, the alignment portion 10 is lifted from the base portion 20 by the operator gripping the gripping portion 60 and lifting the alignment portion 10 upward. Since the operator further moves the gripping portion 60, the alignment portion 10 is inclined in a direction of the arrow illustrated in FIG. 2 with the boundary between the lower surface 12 and the placement surface 21 joined by the hinge 40 as a rotation axis.

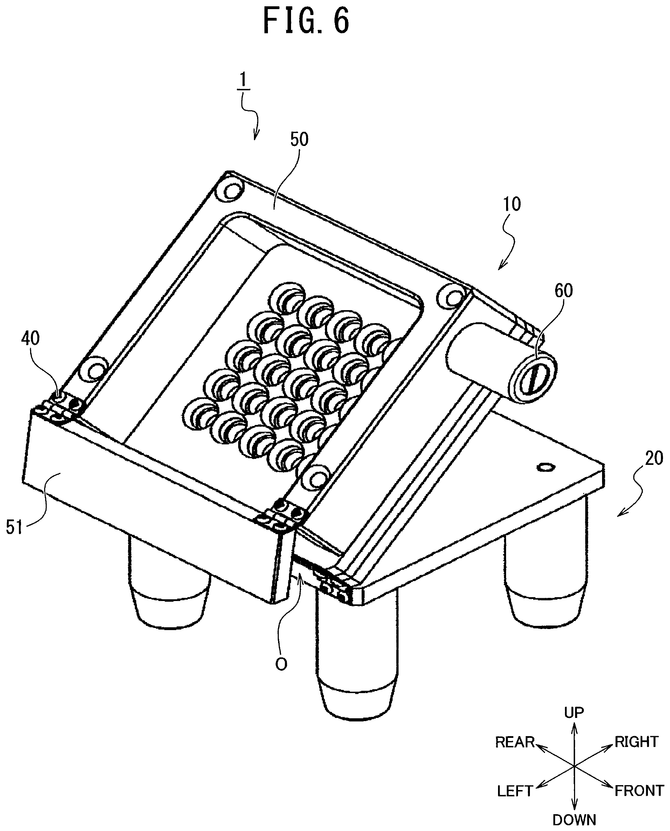

FIG. 6 is a perspective view illustrating a state in which the alignment portion 10 is inclined from the base portion 20 in the insert alignment device 1 according to the first embodiment of the present invention. Since the operator holds the gripping portion 60 and performs the above-described operation, the insert alignment device 1 is in a state illustrated in FIG. 6.

As described above, the opening wall 51 is joined to two sides among other three sides of the wall 50 by the hinge 40 as described above, and the bottom of the opening wall 51 is not joined, and thus the opening wall 51 can be freely move. Therefore, when the alignment portion 10 is inclined, the opening wall 51 gradually opens a joining portion between the opening wall 51 and the wall 50 which are joined by the hinge 40 as a rotation axis.

However, since the upper portion of the opening wall 51 is fixed, the posture of the opening wall 51 itself is maintained in a state substantially parallel to the up-down direction without largely changing the orientation in accordance with gravity, as in the state where the alignment portion 10 is not inclined. Then, the opening wall 51 is in such a state, whereby the opening portion O is formed.

Since the alignment portion 10 is inclined and the opening portion O is formed, although not illustrated in FIG. 6, the excess insert I that has not been entered into the alignment hole 111 in the alignment portion 10 is discharged from the alignment portion 10 to the outside and is received by the recovery device 3.

### [Operation]

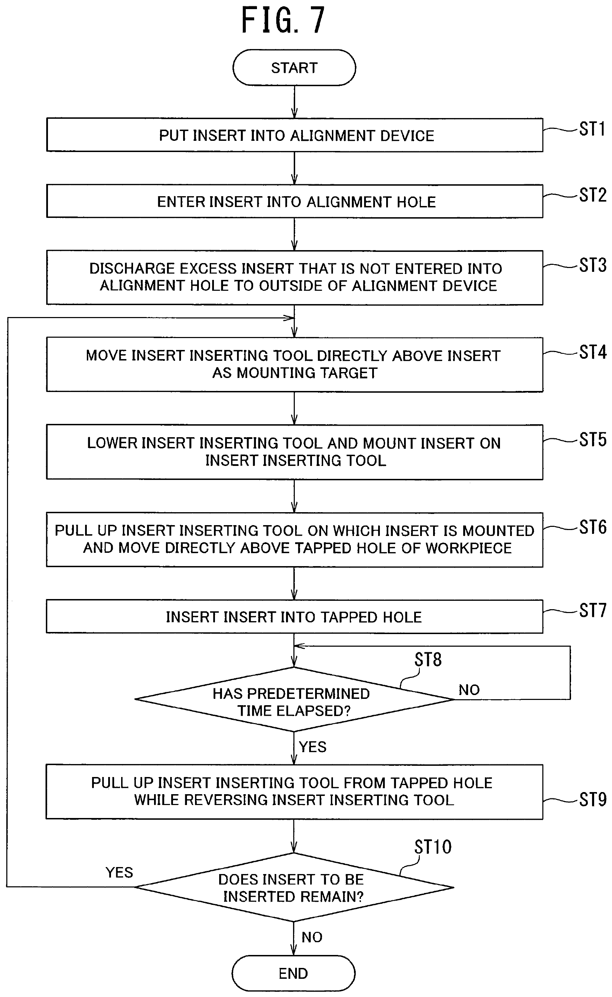

Next, a flow of processing of an insert insertion method using the insert insertion system S in the embodiment of the present invention will be described with reference to FIGS. 7 to 11. FIG. 7 is a flowchart illustrating a flow of the insert insertion method using the insert alignment device 1 according to the embodiment of the present invention.

Note that the flowchart of FIG. 7 illustrates a flow in a case where the insert inserting tool 4 is controlled based on the insertion time when the insert I of the workpiece W is inserted using the insert inserting tool 4. Thus, in the following, a case where the insertion time is used will be described as an example.

First, the insert I is put into the insert alignment device 1 (ST1). In the insert insertion system S in the embodiment of the present invention, the number of inserts I equal to or greater than the number of alignment holes 111 formed on the upper surface 11 are put into the insert alignment device 1 from the feeder 2.

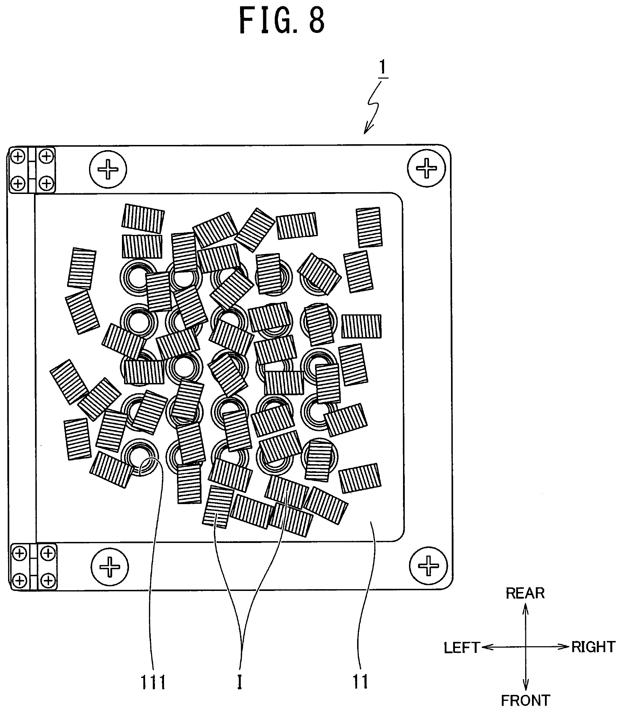

FIG. 8 is a plan view illustrating a state in which the insert I is put into the insert alignment device 1 in the insert insertion method using the insert alignment device 1 according to the embodiment of the present invention. Note that, in FIG. 8, the illustration of the gripping portion 60 is omitted.

As illustrated in FIG. 8, immediately after the putting, the insert I may enter into the alignment hole 111, but the inserts I do not enter into all the alignment holes 111. In addition, there are also inserts I that are disposed to overlap each other without entering into the alignment hole 111.

Therefore, for example, processing of applying vibration to the entire insert alignment device 1 is performed so that the inserts I enter into all the alignment holes 111, and the inserts I are entered into all the alignment holes 111 (ST2). Then, the excess insert I that has not been entered into the alignment hole 111 is discharged to the outside of the insert alignment device 1 (ST3).

The excess insert I is discharged by inclining the alignment portion 10 away from the base portion 20 as illustrated in FIG. 6. The alignment portion 10 is inclined, whereby the opening wall 51 is opened and the opening portion O is formed. The excess insert I is discharged from the opening portion O to the outside of the insert alignment device 1. Then, the discharged excess insert I is recovered by the recovery device 3.

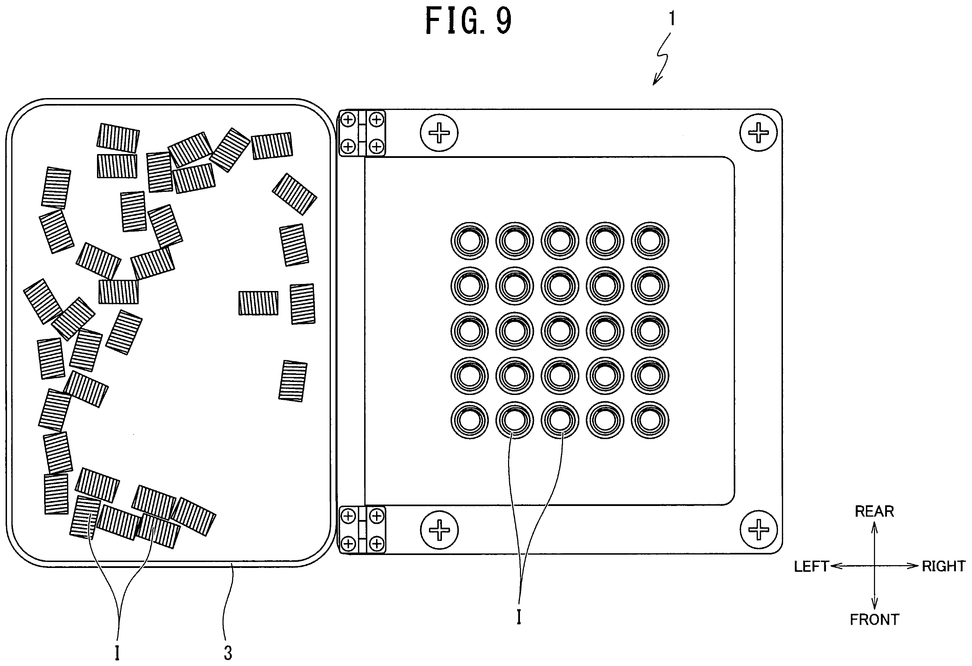

FIG. 9 is a plan view illustrating a state in which the excess insert is discharged from the insert alignment device 1 in the insert insertion method using the insert alignment device 1 according to the first embodiment of the present invention. Note that, in FIG. 9, the feeder 2 and the gripping portion 60 are not illustrated.

As illustrated in FIG. 9, the inserts I that are equal to or more than the number of the alignment holes 111 are recovered in the recovery device 3 as excess inserts I. On the other hand, in the insert alignment device 1 after the excess insert I is discharged, the inserts I are entered into all the alignment holes 111 and are aligned.

In this state, the insert I can be mounted on the insert inserting tool 4. Thus, the insert inserting tool 4 is moved directly above the insert I as the mounting target (ST4), and insert inserting tool 4 is lowered toward the insert I to mount the insert I aligned in the alignment hole 111 on the mandrel (ST5).

When the insert I is mounted on the mandrel, as described above, the insert inserting tool 4 is aligned downward to enter into the alignment hole 111 to apply a force to the insert I. In this case, since one end portion of the insert I is closely attached to the co-rotation prevention member 13, the co-rotation of the insert I can be prevented even if the mandrel rotates.

In addition, since the accommodation portion 131 is formed in the co-rotation prevention member 13, the tip of the mandrel that has entered to the back of the alignment hole 111 can advance without being hindered by the co-rotation prevention member 13. Therefore, the claw can be reliably hooked on the notch of the insert I.

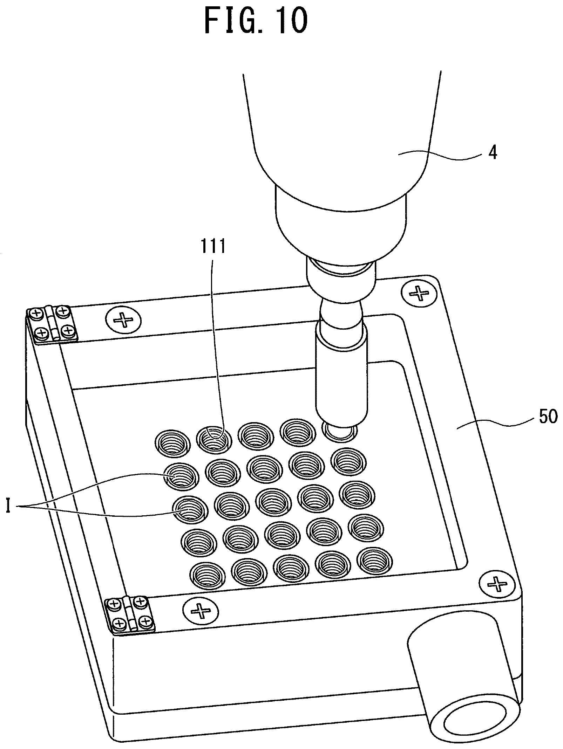

FIG. 10 is a perspective view illustrating a state in which the insert I aligned by the insert alignment device 1 is mounted on the insert inserting tool 4 in the insert insertion method using the insert alignment device 1 according to the embodiment of the present invention. Note that, in FIG. 10, the base portion 20 is not illustrated.

As illustrated in FIG. 10, the insert inserting tool 4 approaches the insert I aligned from the upper portion of the insert inserting tool 4, and the insert I is mounted while rotating the mandrel. FIG. 10 illustrates a state in which the insert I is mounted on the mandrel. In this state, the claw of the mandrel is hooked on the notch of the insert I, and the tip of the mandrel is accommodated in the accommodation portion 131.

Then, the insert inserting tool 4 on which the insert I is mounted is pulled up, and the insert inserting tool 4 is moved directly above the tapped hole W1 of the workpiece W (ST6). Then, the insert I is inserted into the tapped hole W1 while the insert inserting tool 4 is lowered toward the tapped hole W1 (ST7).

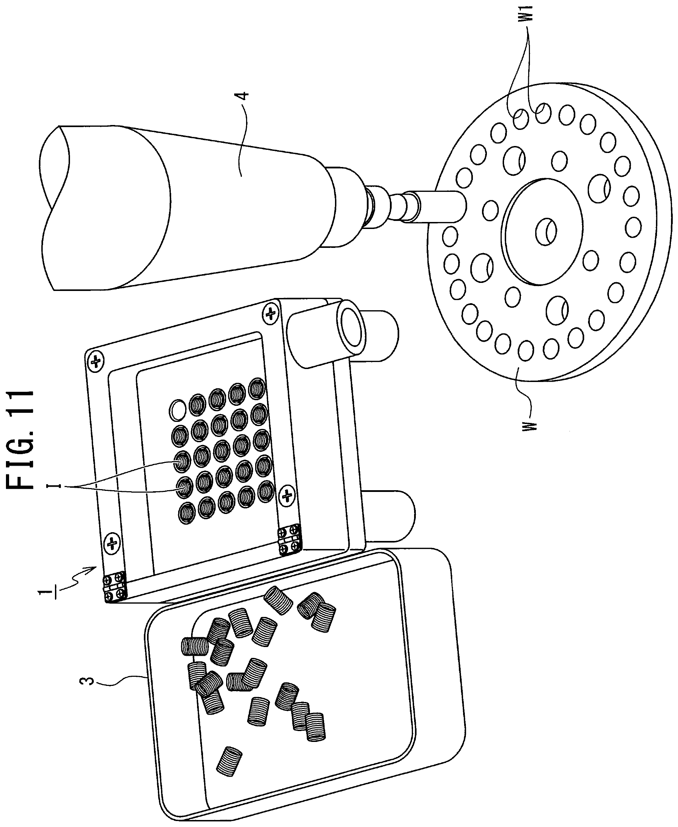

FIG. 11 is a perspective view illustrating a state in which the insert I mounted on the insert inserting tool 4 is inserted into the workpiece W in the insert insertion method using the insert alignment device 1 according to the embodiment of the present invention. In FIG. 11, the feeder 2 is also not illustrated. The tapped hole W1 is formed to be smaller than the outer diameter of the insert I, and the insert I is screwed into the tapped hole W1, and thus a female screw is disposed in the workpiece W.

In the insert inserting tool 4, it is determined whether or not a predetermined time has elapsed as the insertion time of the insert I into the workpiece W (ST8). In a case where the predetermined time has not elapsed (NO in ST8), the insertion is continuously performed since the insertion of the insert I is still being performed. On the other hand, in a case where the predetermined time has elapsed (YES in ST8), the insert inserting tool 4 is pulled up from the tapped hole W1 while reversing the mandrel (ST9).

Then, it is confirmed whether or not the insert I to be inserted into the insert alignment device 1 remains (ST10). In a case where the insert I remains (YES in ST10), the processing returns to Step ST4 and the above-described processing is performed again. On the other hand, in a case where there is no insert I to be inserted (NO in ST10), the insertion processing of the insert using the insert alignment device 1 is ended.

By using the insert alignment device 1 or the insert insertion method using the insert alignment device 1 described above, it is possible to prevent the co-rotation of the insert during mounting and reliably mount the insert on the insert inserting tool while eliminating the risk when the insert is mounted on the insert inserting tool. In addition, it is possible to easily perform the number management and the insertion management of inserts when a large number of the inserts are inserted into the workpiece.

### (Second Embodiment)

Next, a second embodiment of the present invention will be described. Note that, in the second embodiment, the same components as the components described in the first embodiment are denoted by the same reference signs, and the description of the same components will not be repeated.

In an insert alignment device 100 in the second embodiment, the structures of the alignment portion 10 and the base portion 20 are the same as those of the insert alignment device 1 in the above description. On the other hand, the insert alignment device 100 in the second embodiment is different from the insert alignment device 1 in the first embodiment in a method of discharging the excess insert I to the outside.

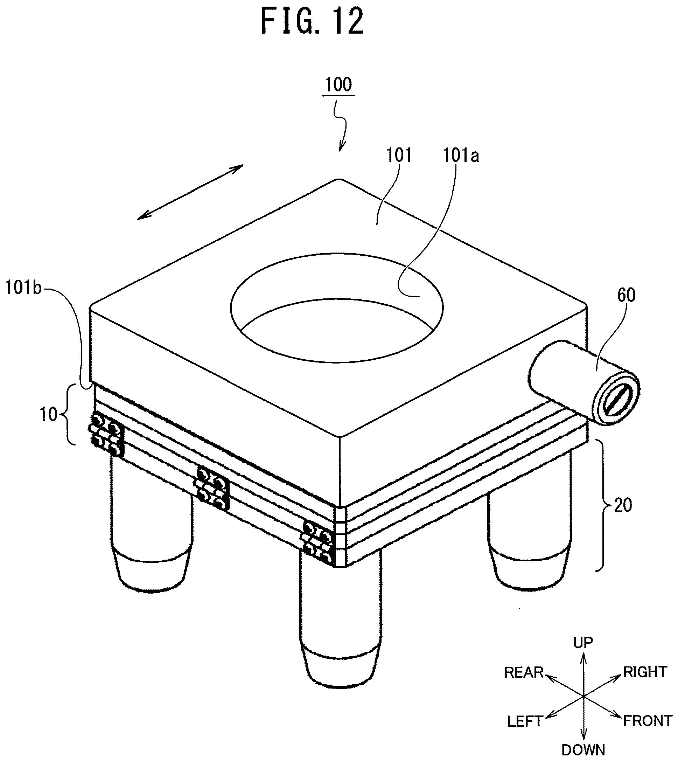

FIG. 12 is a perspective view illustrating the insert alignment device 100 according to the second embodiment of the present invention. In the insert alignment device 100, a wall 101 is also provided to surround the periphery of the upper surface 11.

However, the structure of the wall 101 is different from the structure of the wall 50 in the insert alignment device 1. In addition, in the second embodiment, the wall 101 is slid in a direction of the arrow illustrated in FIG. 12, and thus the excess insert I is discharged to the outside of the insert alignment device 100.

Note that the wall 101 is formed in a quadrangular plate shape having substantially the same size as the alignment portion 10, instead of surrounding the periphery of the upper surface 11, unlike the wall 50 of the insert alignment device 1 in the first embodiment. In addition, a through hole 101a having a circular shape is formed in a region where the alignment hole 111 is formed.

In addition, a bottom surface 101b of the wall 101 faces the front surface of the upper surface 11. The bottom surface 101b and the front surface of the upper surface 11 may be in contact with each other, or a space may be provided to such an extent that an excess insert I is not interposed between the bottom surface 101b and the front surface of the upper surface 11 when the put-in insert I is discharged.

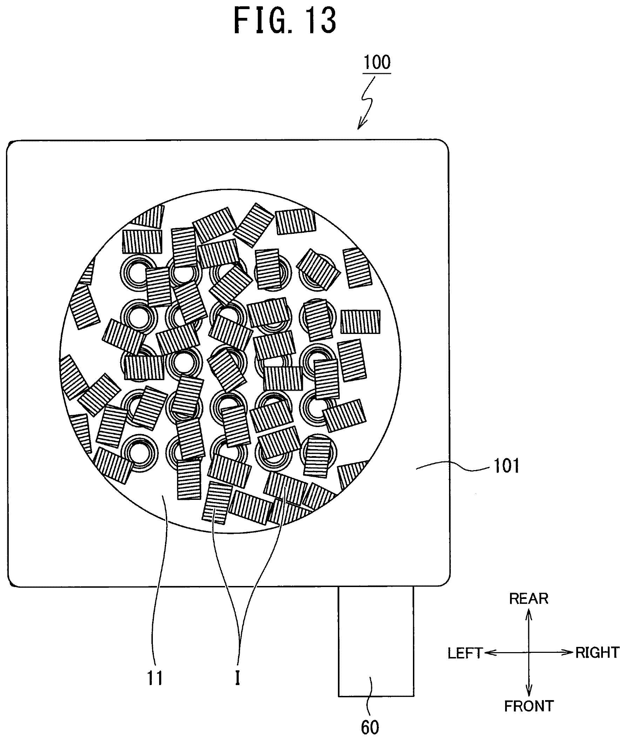

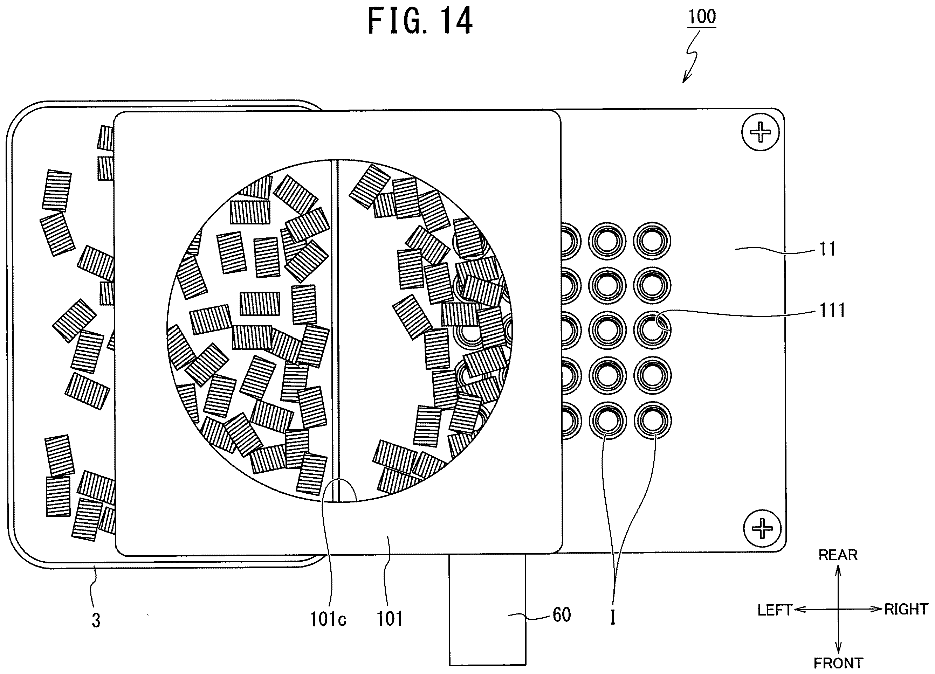

FIG. 13 is a plan view illustrating a state in which the insert I is put into the insert alignment device 100 according to the second embodiment of the present invention. In addition, FIG. 14 is a plan view illustrating a state in which the excess insert I is discharged from the insert alignment device 100 according to the second embodiment of the present invention.

As illustrated in FIG. 13, the number of inserts I put into the insert alignment device 100 is larger than the number of alignment holes 111 as described above. Therefore, there is an insert I that has entered into the alignment hole 111, and there are inserts I that are disposed to overlap each other without entering into the alignment hole 111. However, since the wall 101 is present, even though the number of put-in inserts I is large, the insert I does not fall outside the insert alignment device 100 immediately after the insertion.

Then, the insert I is aligned by entering the insert I into the alignment hole 111. In addition, the excess insert I that has not been entered into the alignment hole 111 is discharged to the outside of the insert alignment device 100. FIG. 14 illustrates such a state.

As illustrated in FIG. 14, for example, the entire wall 101 slides on the front surface of the upper surface 11 by the operator moving the gripping portion 60 illustrated in FIG. 12 in a direction of the arrow. By sliding the wall 101, the excess insert I is discharged to the recovery device 3 outside the insert alignment device 100.

By using the insert alignment device 100 or the insert insertion method using the insert alignment device 100 described above, it is possible to prevent the co-rotation of the insert during mounting and reliably mount the insert on the insert inserting tool while eliminating the risk when the insert is mounted on the insert inserting tool. In addition, it is possible to easily perform the number management and the insertion management of inserts when a large number of the inserts are inserted into the workpiece.

When the insert I is mounted on the insert inserting tool 4, it is necessary to prevent the co-rotation of the insert I itself with the rotation of the mandrel of the insert inserting tool 4. That is, the insert I must be fixed while being mounted on the insert inserting tool 4, but in the insert alignment device 1 or 100 in the first or second embodiment of the present invention, the co-rotation prevention member 13 is disposed to be interposed between the upper surface 11 and the lower surface 12 on which the alignment holes 111 are formed.

Therefore, one end of the insert I entered into the alignment hole 111 comes into contact with the co-rotation prevention member 13. Therefore, the mandrel of the insert inserting tool 4 that has been entered into the alignment hole 111 in order to mount the insert I presses one end of the insert I to be mounted, on the co-rotation prevention member 13. The insert I is fixed and the co-rotation is prevented by one end of the insert I being strongly pressed on the co-rotation prevention member 13.

On the other hand, since the diameter of the alignment hole 111 in the circumferential direction is larger than the diameter of the insert I, the insert I aligned in the alignment hole 111 does not come into contact with the storage portion 111b. Therefore, it does not contribute to fixing the insert I when the insert I is mounted on the insert inserting tool 4.

In the insert alignment device 1 in the embodiment of the present invention as described above, in order to prevent the co-rotation when the insert I is mounted on the insert inserting tool 4, the co-rotation prevention member 13 is used, and it is possible to secure the safety since the hand of the operator is not used for fixing the insert I.

In addition, by using the insert alignment device 1 or 100 according to the first or second embodiment of the present invention, the insert I can be efficiently inserted into the workpiece W since the insert inserting tool 4 can be continuously mounted and pulled up to move to the workpiece W after coming into contact with the other end of the insert I.

### (Third Embodiment)

Next, a third embodiment of the present invention will be described. Note that, in the third embodiment, the same components as the components described in the first and second embodiments are denoted by the same reference signs, and the description of the same components will not be repeated.

An insert alignment device 200 in the third embodiment is different from the insert alignment device 1 or 100 described in the first or second embodiment, and an example in which the insert alignment device 200 is configured as a co-rotation prevention cartridge in which at least the upper surface and the co-rotation prevention member are detachably attachable will be described.

As described above, there are a plurality of types of the insert I in terms of the diameter and the number of turns. In addition, there is also an insert I that has the same diameter but a different number of turns. Therefore, even in the insert alignment devices 1 and 100 in the first and second embodiments described above, it is presumed that the alignment portion 10 is prepared for each type of insert I.

However, since the alignment portion 10 and the base portion 20 are fixed by the hinge 40, in a case where the alignment portion 10 is changed for each insert I as a mounting target, it is necessary to detach the hinge 40. Therefore, when the alignment portion 10 can be changed without detaching the hinge 40, it is possible to more easily handle a plurality of types of inserts I.

Therefore, in the insert alignment device 200 according to the third embodiment described below, particularly, the upper surface 11 and the co-rotation prevention member 13 in the alignment portion 10 are configured as a co-rotation prevention cartridge C that is detachably attachable to the insert alignment device 200.

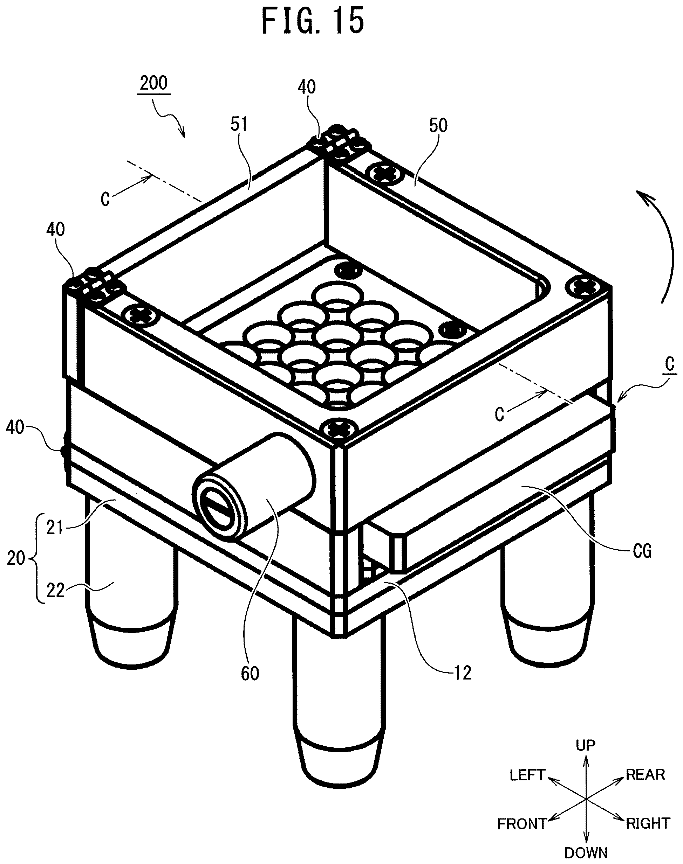

FIG. 15 is a perspective view illustrating the insert alignment device 200 according to the third embodiment of the present invention. In the insert alignment device 200 illustrated in FIG. 15, a state in which the co-rotation prevention cartridge C is mounted is illustrated, and the upper surface for aligning the insert I is visible.

That is, the insert alignment device 200 is different from the insert alignment devices 1 and 100 described above in the first and second embodiments in that the alignment portion 10 for aligning the insert I is configured to be detachably attachable to the insert alignment device 200 and a cartridge reception portion 70 for receiving the co-rotation prevention cartridge C is formed on the insert alignment device 200 side. On the other hand, except for these points, the insert alignment devices 1 and 100 described above and other structures are the same.

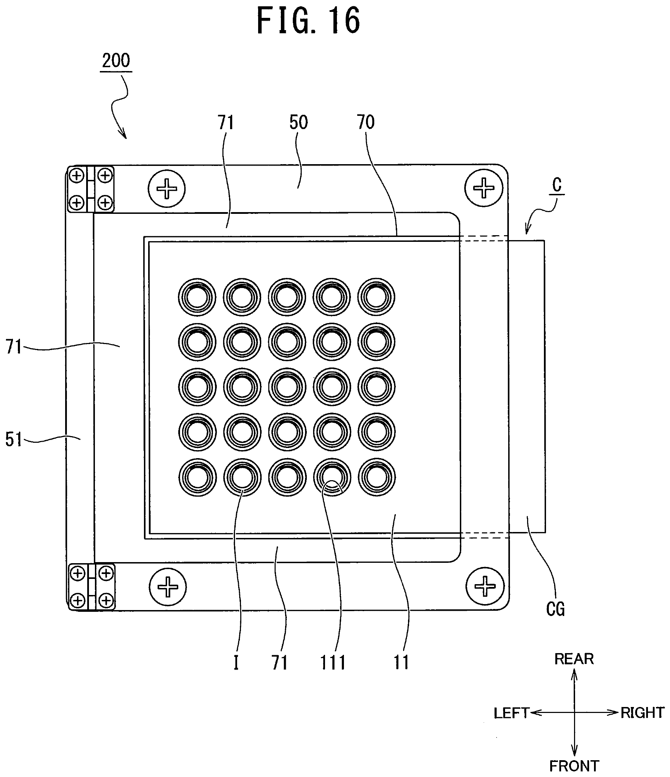

In addition, FIG. 16 illustrates a state in which the insert alignment device 200 is viewed in a plan view. FIG. 16 is a plan view illustrating the insert alignment device 200 according to the third embodiment of the present invention. Note that, in FIG. 16, the illustration of a chamfer of a corner portion in a portion protruding from the insert alignment device 200 in the gripping portion 60 and the co-rotation prevention cartridge C is omitted. In addition, FIG. 16 illustrates a state in which the insert I is entered into the alignment hole 111.

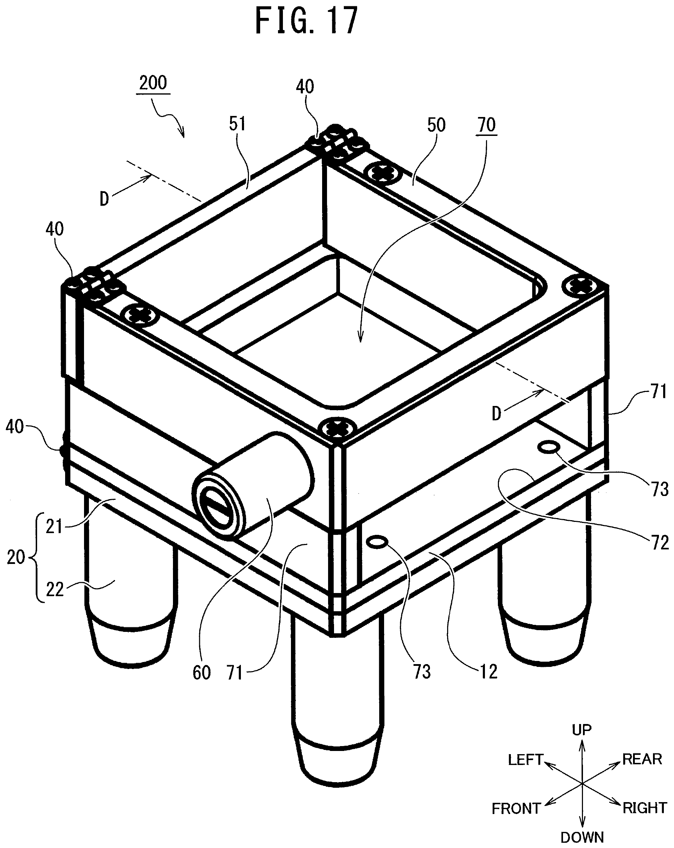

On the other hand, FIG. 17 is a perspective view illustrating a state in which the co-rotation prevention cartridge C is removed from the insert alignment device 200 according to the third embodiment of the present invention. FIG. 17 illustrates the cartridge reception portion 70 for receiving the co-rotation prevention cartridge C in the insert alignment device 200.

The bottom surface of the cartridge reception portion 70 is the lower surface 12 described above. Then, a wall (insertion wall 71) is provided around the lower surface 12. The insert alignment device 200 in the third embodiment of the present invention is formed in a substantially rectangular shape except for a portion of the base portion 20. Therefore, the insertion wall 71 is also provided along the three sides of the lower surface 12.

The reason why the insertion wall 71 is provided only on the three sides of the lower surface 12 is that the remaining one side constitutes an insertion port 72 that serves as a reception port when the co-rotation prevention cartridge C is mounted. In a case where the co-rotation prevention cartridge C is inserted into the insert alignment device 200, the co-rotation prevention cartridge C is inserted from the insertion port 72, and the co-rotation prevention cartridge C is moved in the left direction illustrated in FIGS. 15 to 17.

As described above, the insertion wall 71 is provided on three sides except for the insertion port 72 on the lower surface 12. Then, as illustrated in FIG. 15, a distance in the front-rear direction at the insertion port 72 is substantially the same as the distance of the co-rotation prevention cartridge C in the same direction. That is, the size of the insertion port 72 is determined by the insertion wall 71.

Then, as illustrated in FIGS. 16 and 17, two insertion walls 71 and 71 that continue from the insertion port 72 in the left direction are parallel to the right-left direction. By forming the insertion walls 71 and 71 in this manner, the co-rotation prevention cartridge C is inserted into the insert alignment device 200 to be guided to the insertion walls 71 and 71 from the insertion port 72.

The co-rotation prevention cartridge C inserted into the insert alignment device 200 to be guided by the insertion walls 71 and 71 comes into contact with the insertion wall 71 disposed at a position facing the insertion port 72 and remains at that position. That is, with the insertion wall 71 provided at the position, it is not possible for the co-rotation prevention cartridge C to move further to the left during the insertion.

From the above description, the insertion wall 71 in the cartridge reception portion 70 defines a position of the co-rotation prevention cartridge C in the insert alignment device 200 during the insertion and after the insertion.

Furthermore, particularly as illustrated in FIG. 17, the insertion wall 71 formed on three sides of the lower surface 12 also serves as a base of the wall 50. Here, in the insert alignment device 1 or 100 in the first or second embodiment, the wall 50 is formed on the upper portion of the upper surface 11.

On the other hand, in the insert alignment device 200 in the third embodiment, both the upper surface and the co-rotation prevention member are configured as the co-rotation prevention cartridge C that is detachably attachable to the insert alignment device 200. Therefore, the wall 50 cannot be formed in the upper portion of the upper surface 11. Thus, the wall 50 is disposed and fixed in the upper portion of the cartridge reception portion 70 (insertion wall 71), thereby maintaining the above-described role of the wall 50.

As illustrated in FIG. 17, two fitting portions 73 and 73 are formed near the insertion port 72 on the lower surface 12 corresponding to the bottom surface of the cartridge reception portion 70. The fitting portions 73 and 73 are fitted to fixing portions C3a and C3a provided in the co-rotation prevention cartridge C in order to prevent the co-rotation prevention cartridge C from being removed after the co-rotation prevention cartridge C is mounted on the insert alignment device 200. Note that the fixing portion C3a will be described later.

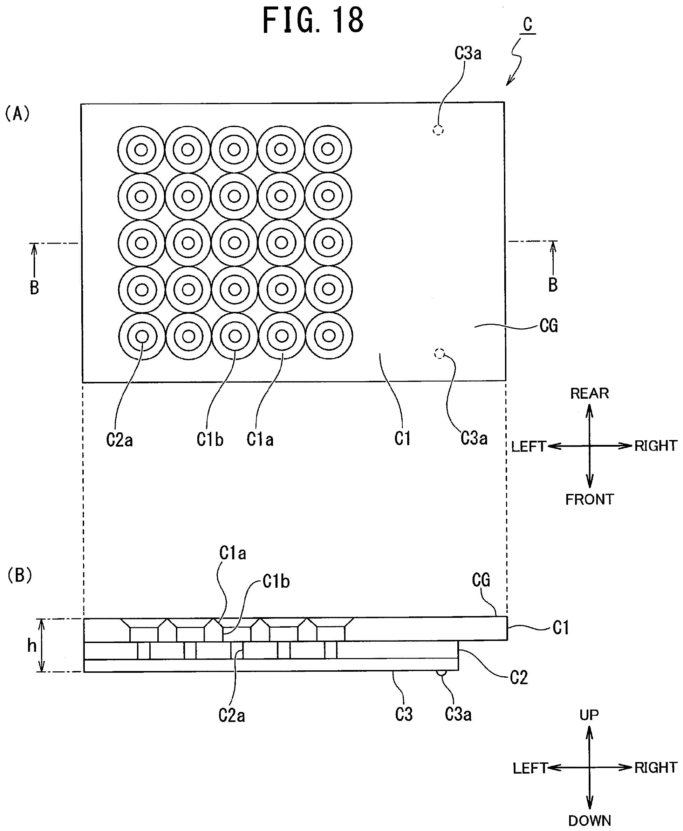

Next, the co-rotation prevention cartridge C will be described. FIG. 18 illustrates the co-rotation prevention cartridge C according to the third embodiment of the present invention. (A) is a plan view and (B) is a cross-sectional view taken along line B-B of the plan view.

As illustrated in FIG. 18(B), the co-rotation prevention cartridge C has a three-layer structure. An upper surface C1, a co-rotation prevention member C2, and an adjustment plate C3 are provided in this order from the top to the bottom. Here, the functions and configurations of the upper surface C1 and the co-rotation prevention member C2 are the same as those of the upper surface 11 and the co-rotation prevention member 13 described in the first and second embodiments.

That is, as illustrated in FIG. 18(A) and 18(B), an alignment hole is formed in the upper surface C1. Then, a tapered portion C1a is provided at a portion connected to the front surface of the upper surface C1, and a storage portion C1b that is continuous from the tapered portion C1a and stores the insert I as a mounting target on the insert inserting tool 4 is provided. The upper surface C1 is prepared for each type of the insert I, and the diameter of the storage portion C1b and the depth in the up-down direction are different depending on the type of the insert I.

The tapered portion C1a and the storage portion C1b are formed to be disposed substantially at the central portion of the insert alignment device 200 as illustrated in FIG. 16, when the co-rotation prevention cartridge C is mounted at a desired position on the insert alignment device 200.

In addition, an accommodation portion C2a for accommodating the tip portion of the mandrel that mounts the insert I is formed in the co-rotation prevention member C2. As for the material of the co-rotation prevention member C2, an elastomer, particularly a rubber member can be suitably adopted, similarly to the above description.

On the other hand, there is a difference in size between the upper surface C1 and the co-rotation prevention member C2. That is, as is clear from the cross-sectional view of FIG. 18(B), the upper surface C1 is larger than the co-rotation prevention member C2 in the right-left direction.

That is, as illustrated in FIG. 18(B), in a case where end portions on the left side of the drawing in each portion of the co-rotation prevention cartridge C are aligned, the upper surface C1 protrudes to the right side, compared to the co-rotation prevention member C2. The protruding portion corresponds to a portion that protrudes in a case where the co-rotation prevention cartridge C is mounted on the insert alignment device 200, as illustrated in FIG. 15, for example.

This protruding portion is a gripping portion CG. The gripping portion CG is provided such that the operator can grip the gripping portion CG to attach and detach the co-rotation prevention cartridge C to and from the insert alignment device 200. Then, since the gripping portion CG can be formed to be thin only by the thickness of the upper surface C1 by making the gripping portion CG larger than the co-rotation prevention member C2 or the adjustment plate C3 disposed below the upper surface C1, the operator can easily grip the upper surface C1.

The adjustment plate C3 is provided on a lower layer of the co-rotation prevention member C2. In a case where the thickness of the upper surface C1 is changed as described later, the adjustment plate C3 can change the thickness in accordance with the change. As a result, it is possible to keep the entire height h of the co-rotation prevention cartridge C constant regardless of the thickness of the upper surface C1.

In addition, when the co-rotation prevention cartridge C is mounted on the insert alignment device 200, the co-rotation prevention cartridge C is inserted from the insertion port 72 as described above. Therefore, when the co-rotation prevention cartridge C is hooked on the cartridge reception portion 70, it is difficult to smoothly attach and detach the co-rotation prevention cartridge C.

Thus, in the co-rotation prevention cartridge C, the adjustment plate C3 is disposed at a position facing the lower surface 12 constituting the bottom surface of the cartridge reception portion 70. Then, for the adjustment plate C3, for example, by selecting a material having good sliding with the lower surface 12, smooth attachment and detachment when the co-rotation prevention cartridge C is mounted on the cartridge reception portion 70 is possible.

In addition, as will be described later, in a case where the height of the upper surface C1 is changed according to the type of the insert I, the height of the adjustment plate C3 is also changed, and the adjustment plate C3 serves as a role of keeping the height of the entire co-rotation prevention cartridge C constant. Accordingly, an appropriate height of the adjustment plate C3 is selected corresponding to the upper surface C1.

However, in a case where it is necessary to make the height of the adjustment plate C3 very low in relation to the upper surface C1, for example, a very thin film-like material can be adopted instead of a material having a height, such as a plate material.

Further, the fixing portions C3a and C3a that protrude toward a side opposite to the side on which the co-rotation prevention member C2 is disposed are formed in the adjustment plate C3. The fixing portions C3a and C3a are fitted to the fitting portions 73 and 73 formed on the lower surface 12 when the co-rotation prevention cartridge C is mounted on the insert alignment device 200.

Specifically, when the co-rotation prevention cartridge C is mounted on the insert alignment device 200, the co-rotation prevention cartridge C is inserted from the insertion port 72 and is pushed, for example, in the left direction illustrated in FIG. 15. Then, when the fixing portion C3a is pushed into a certain extent, the fixing portion C3a comes into contact with the insertion port 72.

This is because the fixing portion C3a protrudes toward the lower surface 12 side. When the co-rotation prevention cartridge C is further pushed in the left direction in a state where the fixing portion C3a is in contact with the lower surface 12 of the insertion port 72, the fixing portion C3a moves in the upward direction. This is because the fixing portion C3a is biased to protrude downward from the adjustment plate C3.

Then, when the co-rotation prevention cartridge C is pushed in the left direction while the fixing portion C3a is in contact with the lower surface 12, and then reaches the position of the fitting portion 73 formed on the lower surface 12, the fixing portion C3a moves downward by a biasing force and is fitted to the fitting portion 73.

Therefore, after the co-rotation prevention cartridge C is inserted into the insert alignment device 200, the fixing portions C3a and C3a can prevent the co-rotation prevention cartridge C from falling off from the insert alignment device 200.

On the other hand, in a case where the co-rotation prevention cartridge C is detached from the insert alignment device 200, the co-rotation prevention cartridge C is pulled out in the right direction. In this case, the fixing portion C3a comes into contact with the edge of the fitting portion 73 and moves upward in the adjustment plate C3 between the fixing portion C3a and the lower surface 12.

That is, the co-rotation prevention cartridge C moves in the right direction in a state in which the fixing portion C3a is pushed into the adjustment plate C3 while being in contact with the lower surface 12. Then, when the fixing portion C3a comes out from the insertion port 72, the fixing portion C3a protrudes downward from the adjustment plate C3 again by the biasing force.

Note that, in the co-rotation prevention cartridge C and the insert alignment device 200 in the embodiment of the present invention, two fixing portions C3a, C3a and two fitting portions 73, 73 are provided, respectively. However, the number of the fixing portions and the fitting portions to be formed, the formation positions, and the like can be freely set. In addition, the formation position and the like can also be freely set in the same manner.

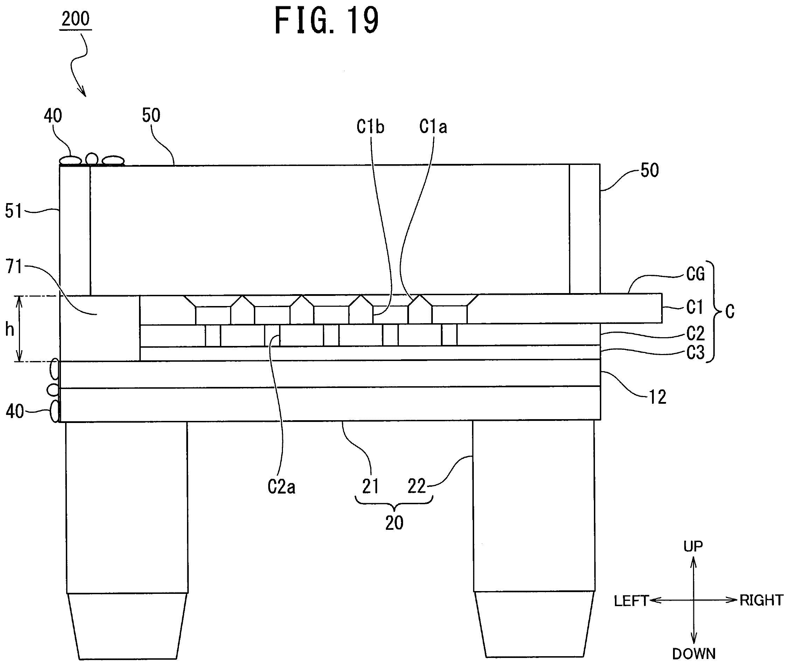

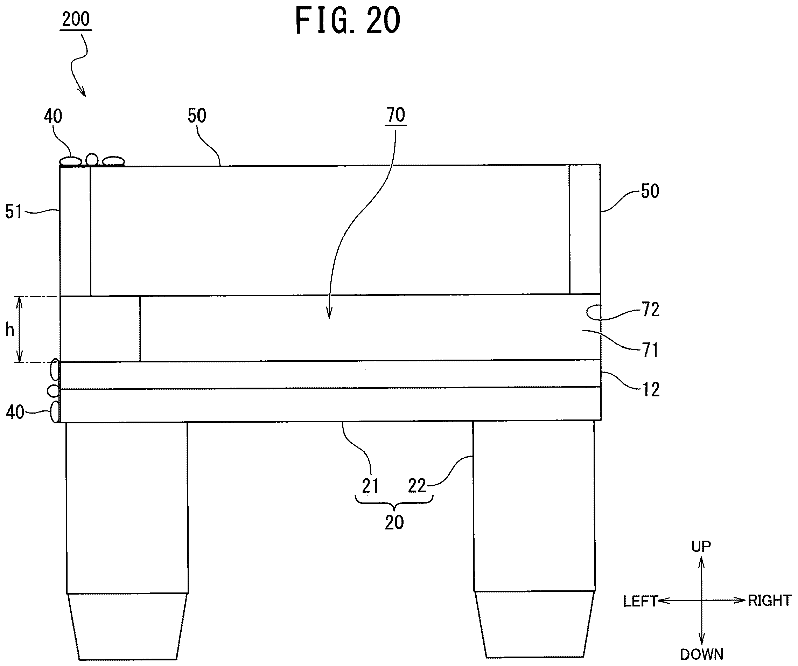

Next, the insert alignment device 200 in the third embodiment described above with reference to FIGS. 15 to 18 will be described again with reference to cross-sectional views. FIG. 19 is a cross-sectional view taken along line C-C of the insert alignment device 200 according to the third embodiment of the present invention illustrated in FIG. 15. Similarly, FIG. 20 is a cross-sectional view taken along line D-D of the insert alignment device 200 according to the third embodiment of the present invention illustrated in FIG. 17.

That is, FIG. 19 illustrates a state in which the co-rotation prevention cartridge C is inserted into the insert alignment device 200, and FIG. 20 illustrates a state in which the co-rotation prevention cartridge C is removed from the insert alignment device 200.

First, as illustrated in FIG. 19, in a state in which the co-rotation prevention cartridge C is inserted into the insert alignment device 200, the gripping portion CG is in a state of protruding from the insert alignment device 200. Since the gripping portion CG is a portion gripped by the operator grips when the operator attaches or detaches the co-rotation prevention cartridge C to and from the insert alignment device 200 as described above, the gripping portion CG protrudes so that the gripping portion CG can be pulled out even in a state of being mounted on the insert alignment device 200.

The state in which the co-rotation prevention cartridge C is mounted on the insert alignment device 200 is, for example, the same as described with reference to FIG. 3 in the first embodiment. That is, the insert I mounted on the insert inserting tool 4 is stored in the storage portion C1b of the upper surface C1.

Then, after the insert inserting tool 4 is lowered from the upper portion of the insert alignment device 200 and the insert I is mounted on the mandrel, the insert inserting tool 4 is raised again and inserted into the tapped hole W1 of the workpiece W.

On the other hand, a portion of the co-rotation prevention cartridge C on a side opposite to the gripping portion CG in the right-left direction is in contact with the insertion wall 71 of the cartridge reception portion 70. Since the co-rotation prevention cartridge C is pushed until the co-rotation prevention cartridge C comes into contact with the insertion wall 71, and is fixed at this position, the disposition position of the insert I can always be set to the set position even though the co-rotation prevention cartridge C is changed depending on the type of the insert I.

Note that, in this state, the fixing portion C3a provided on the adjustment plate C3 and the fitting portion 73 to which the fixing portion C3a is fitted are not visible. However, the fixing portion C3a is fitted to the fitting portion 73, and even though the entire insert alignment device 200 is inclined, the co-rotation prevention cartridge C is not removed from the cartridge reception portion 70.

On the other hand, the operator can detach the co-rotation prevention cartridge C from the insert alignment device 200 by gripping the gripping portion CG and moving the co-rotation prevention cartridge C in the right direction. FIG. 20 illustrates this state.

FIG. 20 illustrates the insertion wall 71 and the insertion port 72 of the cartridge reception portion 70. The co-rotation prevention cartridge C is movable in the right-left direction along the insertion wall 71 extending in the right-left direction. In addition, a distance (height) h from the lower end of the wall 50 to the upper end of the lower surface 12 in the cartridge reception portion 70 is the same as the height h of the co-rotation prevention cartridge C.

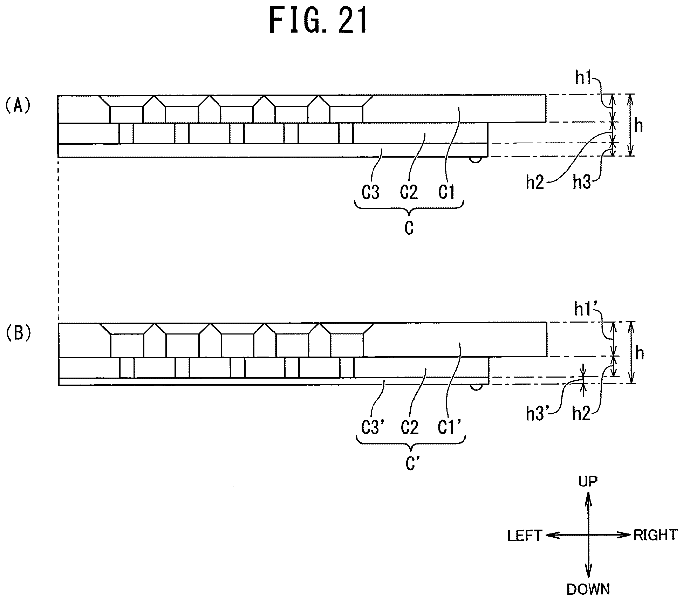

Next, the characteristics of the co-rotation prevention cartridge C in the third embodiment will be described below with reference to FIG. 21.

As described above, there are various types of diameters and heights (number of turns) for each insert I as a target to be mounted on the insert inserting tool 4. In addition, when the insert is mounted on the insert inserting tool 4, it is necessary that the height of the space (accommodation portion C2a) that accommodates the target insert I is appropriate. Therefore, the height of the upper surface C1 in the up-down direction also varies depending on the type of the insert I.

On the other hand, in a case where the thickness of the upper surface C1 is changed, when other members constituting the co-rotation prevention cartridge C, that is, the co-rotation prevention member C2 and the adjustment plate C3 are not changed, the height h of the co-rotation prevention cartridge C is changed depending on the height of the upper surface C1.

When the height h of the co-rotation prevention cartridge C is changed, the height of the cartridge reception portion 70 in the up-down direction (see FIGS. 19 and 20) in the insert alignment device 200 must also be changed accordingly. As a result, the insert alignment device 200 must be prepared for each type of insert I mounted on the insert inserting tool 4, which is not economical.

Therefore, in the co-rotation prevention cartridge C in the third embodiment of the present invention, even though the height of the upper surface C1 is changed according to the height of the insert I, the height h of the entire co-rotation prevention cartridge C is configured not to be changed.

That is, since the height of the upper surface C1 may change depending on the type of the insert I, the height of the adjustment plate C3 is changed in accordance with the height of the upper surface C1. More specifically, in a case where the height of the upper surface C1 is increased, the height of the adjustment plate C3 is decreased. On the contrary, in a case where the height of the upper surface C1 is decreased, the height of the adjustment plate C3 is increased. FIG. 21 illustrates this.

FIG. 21 illustrates a cross-sectional view of the co-rotation prevention cartridge C according to the third embodiment of the present invention. (A) is a cross-sectional view of the co-rotation prevention cartridge C described above. In addition, (B) is a cross-sectional view illustrating the co-rotation prevention cartridge C in a state where the thickness of the upper surface C1 and the adjustment plate C3 is changed.

The co-rotation prevention cartridge C illustrated in FIG. 21(A) is, for example, the same as the co-rotation prevention cartridge C illustrated in the cross-sectional view FIG. 18(B). Therefore, in both the co-rotation prevention cartridge C illustrated in FIG. 18(B) and the co-rotation prevention cartridge C illustrated in FIG. 21(A), the height h1 of the upper surface C1, the height h2 of the co-rotation prevention member C2, and the height h3 of the adjustment plate C3, which constitute the co-rotation prevention cartridge C, are the same.

Here, for convenience, the description will be made with reference to the height of each portion of the co-rotation prevention cartridge C illustrated in FIG. 21(A). On the other hand, when a co-rotation prevention cartridge C' illustrated in FIG. 21(B) is viewed, it can be immediately understood that the upper surface and the height of the adjustment plate are different from those of the co-rotation prevention cartridge C of FIG. 21(A).

That is, here, a height of an upper surface C1' in the co-rotation prevention cartridge C' illustrated in FIG. 21(B) is denoted by a height h1', a height of a co-rotation prevention member C2' is denoted by a height h2', and a height of an adjustment plate C3' is denoted by a height h3'.

First, the height h1 of the upper surface C1 is lower than the height h1' of the upper surface C1'. That is, the thickness of the upper surface C1 in the co-rotation prevention cartridge C is thinner than the thickness of the upper surface C1' of the co-rotation prevention cartridge C'.

On the other hand, the height h3 of the adjustment plate C3 is higher than the height h3' of the adjustment plate C3'. That is, the thickness of the adjustment plate C3 in the co-rotation prevention cartridge C is thicker than the thickness of the adjustment plate C3' in the co-rotation prevention cartridge C'.

On the other hand, when the entire height of the co-rotation prevention cartridge C and the co-rotation prevention cartridge C' is considered, both of the heights are the heights h and are common. That is, even though the heights of the upper surface and the adjustment plate are changed, the height of the entire co-rotation prevention cartridge is maintained.

As described above, even though the upper surface C1 is changed according to the type of the insert I to be mounted, the height h of the co-rotation prevention cartridge C is kept constant by adjusting the height of the adjustment plate C3. In this manner, even in a case where any insert I is used, the co-rotation prevention cartridge C may be different, but one insert alignment device 200 can be used.

### [Operation]

Next, a flow of processing of an insert insertion method using the insert insertion system S in the third embodiment of the present invention will be described. However, the basic flow is as described above with reference to FIG. 7. A difference from the above-described flow is that there is work of mounting the co-rotation prevention cartridge C on the insert alignment device 200 before the first step. Here, an example in which the operator manually mounts the co-rotation prevention cartridge C on the insert alignment device 200 will be described below.

As described above, the co-rotation prevention cartridge C is provided for each insert I as the mounting target on the insert inserting tool 4. Thus, the operator selects the co-rotation prevention cartridge C according to the insert I as the mounting target. In this state, the selected co-rotation prevention cartridge C is fitted into the insert alignment device 200.

Specifically, in a case where the co-rotation prevention cartridge C is fitted into the insert alignment device 200, the operator grips the gripping portion CG and causes a side of the co-rotation prevention cartridge C opposite to the gripping portion CG to enter into the cartridge reception portion 70 from the insertion port 72. Then, the co-rotation prevention cartridge C is moved toward the insertion wall 71 disposed at a position facing the insertion port 72.

In a case where the co-rotation prevention cartridge C is moved in the cartridge reception portion 70, for example, the co-rotation prevention cartridge C can be moved along the insertion wall 71 extending in the right-left direction illustrated in FIG. 17. When the co-rotation prevention cartridge C is pushed into the insert alignment device 200 until the co-rotation prevention cartridge C comes into contact with the insertion wall 71 disposed at the position facing the insertion port 72, the co-rotation prevention cartridge C cannot be moved any more.

In addition, the fixing portion C3a provided in the adjustment plate C3 of the co-rotation prevention cartridge C is fitted into the fitting portion 73 of the lower surface 12. As a result, the co-rotation prevention cartridge C does not fall off from the insert alignment device 200 until the operator grips the gripping portion CG and pulls out the gripping portion CG.

Then, after the co-rotation prevention cartridge C is mounted on the insert alignment device 200, the processing of the insert insertion method using the insert insertion system S is performed in the flow described with reference to FIG. 7.

By using the insert alignment device 200 or the insert insertion method using the insert alignment device 200 described above, it is possible to prevent the co-rotation of the insert during mounting and reliably mount the insert on the insert inserting tool while eliminating the risk when the insert is mounted on the insert inserting tool. In addition, it is possible to easily perform the number management and the insertion management of inserts when a large number of the inserts are inserted into the workpiece.

In particular, the mechanism for preventing the co-rotation of the insert during the mounting is collected in the co-rotation prevention cartridge C for each type of insert I to be mounted. Therefore, it is possible to easily prevent the co-rotation in accordance with the type of the insert I only by selecting the co-rotation prevention cartridge C corresponding to the insert I.

In addition, the co-rotation prevention cartridge C in which at least the upper surface C1 and the co-rotation prevention member C2 are integrated is attached to the insert alignment device 200 in the third embodiment. Then, the functions of the upper surface C1 and the co-rotation prevention member C2 are as described in the insert alignment devices 1 and 100 in the first and second embodiments, and there is no difference in the functions. Therefore, even in an aspect where the co-rotation prevention cartridge C is attached to the insert alignment device 200, the above-described effects are exhibited.

Note that the present invention is not limited to the above-described embodiments, and is an example of the present invention. In the stage of implementation, the components can be modified and specified without departing from the gist, and various changes or improvements can be made to the above-described embodiment of implementation. In addition, various inventions can be formed by appropriately combining a plurality of components disclosed in the above-described embodiments.

For example, some components may be removed from all the components illustrated in the embodiments. Furthermore, components of different embodiments may be appropriately combined, and an aspect in which such changes or improvements are made may also be included in the present invention. The embodiments and the modifications are included in the scope and gist of the invention, and are included in the invention described in the claims and the equivalent scope thereof.

In the above description, the insert alignment device 1 is configured on the premise that the operator moves the gripping portion 60 when the alignment portion 10 is inclined, but for example, an inclination mechanism using some power may be provided, and the alignment portion 10 may be inclined by the inclination mechanism.

Similarly, regarding the method of sliding the wall 101, in addition to the above-described method of moving the wall 101 via the gripping portion 60 by the operator, a method of sliding the wall 101 using some power can also be adopted.

In addition, as described above, the operation of the device constituting each portion in the insert insertion system S can be automated. The same applies to a case where the co-rotation prevention cartridge C in the third embodiment is used, and for example, the co-rotation prevention cartridge C according to the type of the insert I can be selected, and the attachment and detachment to and from the insert alignment device 200 can be automated.

In addition, in the first embodiment described above, since the opening wall 51, which is a portion of the wall 50, is opened by inclining the alignment portion 10, the opening portion O is formed and the excess insert I is discharged from the insert alignment device 1. Since the opening wall 51 is fixed to the upper portion of the wall 50 and the hinge 40 and the lower portion of the opening wall 51 is not fixed, the opening portion O is formed by the above-described movement, but the method of forming the opening portion O is not limited to such a method. For example, the opening portion O may be formed by sliding a portion of the wall 50 or detaching the portion of the wall 50.

In addition, regarding the method of inclining the alignment portion 10 in the insert alignment device 1, for example, as described with reference to FIG. 6, the alignment portion 10 is inclined such that the entire opening wall 51, which is one side of the wall 50, is on the lower side. However, for example, a configuration in which the alignment portion 10 is inclined such that the opening portion O can be made at the corner portion formed by the wall 50, and the corner portion is directed downward can be adopted.

Alternatively, for example, a structure in which a pair of walls 50 facing each other in the wall 50 is formed as opening walls 51, respectively, and the alignment portion 10 can be inclined such that each of the opening walls 51 is on the lower side can also be adopted. By making it possible to incline the alignment portion 10 like a seesaw as described above, it is possible to more quickly discharge the excess insert I.

Note that, in the co-rotation prevention cartridge C in the third embodiment, as described above, the change in the height of the upper surface C1 is adjusted only by the adjustment plate C3. Thus, the co-rotation prevention member C2 sandwiched between the upper surface C1 and the adjustment plate C3 does not contribute to the change in height. However, regarding the change in the height of the upper surface C1, the entire height of the co-rotation prevention cartridge C may be maintained by adjusting the height of the co-rotation prevention member C2.

In addition, it has been described that the alignment portion 10 in the first and second embodiments and the co-rotation prevention cartridge C in the third embodiment can be changed according to the type of each insert I to be mounted on the insert inserting tool 4. This is due to the fact that the size of the diameter and the number of turns vary depending on the type of the insert I.

Thus, the diameters of the storage portions 111b and C1b are changed to handle the size of the diameter. On the other hand, in a case where the diameters are the same but the number of turns is different, the heights of the storage portions 111b and C1b are changed to handle this case. Then, the heights of the storage portions 111b and C1b are changed, and thus the thicknesses (heights) of the upper surfaces 11 and C1 are also different.

However, for example, in a case where the diameters are the same but the number of turns is different, the height of the storage portions 111b and C1b can be changed by adjusting the angles of the tapered portions 111a and C1a, instead of changing the heights of the storage portions 111b and C1b. In such an aspect of the change, it is conceivable that the thickness (height) of the upper surfaces 11 and C1 does not need to be changed even though the heights of the storage portions 111b and C1b are changed.

Further, it is also considered that, when the inserts I are stored in the storage portions 111b and C1b and aligned, the all inserts I do not necessarily have to be stored in the storage portions 111b and C1b, and it is sufficient that the other end of the insert I protrudes into regions of the tapered portions 111a and C1a. In this case, by adjusting the angles of the tapered portions 111a and C1a and the heights of the storage portions 111b and C1b, it is possible to handle a plurality of types of the inserts I having the same diameter but different numbers of turns with one type of the upper surfaces 11 and C1.

Therefore, while it is necessary to prepare the alignment portion 10 or the co-rotation prevention cartridge C in accordance with the type of the insert I, there is a possibility that the alignment portion 10 or the co-rotation prevention cartridge C can be shared to some extent for the insert I having a different type only in terms of the number of turns even though the diameter is the same.

In the co-rotation prevention cartridge C in the third embodiment, as a fixing method when the co-rotation prevention cartridge C is mounted on the insert alignment device 200, a case where the fixing portion C3a is fitted to the fitting portion 73 of the lower surface 12 to be fixed has been described as an example. However, the fixing method is not limited to such a method.

For example, a movement prevention member can be provided at a portion of the lower surface 12 directly below the insertion port 72. The movement prevention member has, for example, a long plate shape, and a portion in the longitudinal direction is fixed to the lower surface 12 to be rotatable.

In addition, the length in the longitudinal direction of the movement prevention member is a length that does not exceed the height of the adjustment plate C3 and the co-rotation prevention member C2 of the co-rotation prevention cartridge C mounted on the insert alignment device 200 in the up-down direction, in a case where the movement prevention member is rotated to be parallel to the up-down direction of the insert alignment device 200.

The movement prevention member is disposed in an orientation in which the longitudinal direction of the movement prevention member is the front-rear direction in a state in which the co-rotation prevention cartridge C is not mounted on the insert alignment device 200. Since the movement prevention member is disposed in such an orientation, the movement prevention member does not block the insertion port 72.

On the other hand, after the co-rotation prevention cartridge C is mounted on the insert alignment device 200, the movement prevention member is rotated such that the longitudinal direction of the movement prevention member is the up-down direction. In this state, even though the co-rotation prevention cartridge C is to be pulled out from the insert alignment device 200, the movement prevention member can come into contact with the adjustment plate C3 and a portion of the co-rotation prevention member C2 to prevent the co-rotation prevention cartridge C from moving in the right-left direction.

In addition, as described above, the length of the movement prevention member in the longitudinal direction is a length that does not exceed the heights of the adjustment plate C3 and the co-rotation prevention member C2 in the up-down direction even though the movement prevention member is rotated to be parallel to the up-down direction. Accordingly, the movement prevention member does not interfere with the upper surface C1.

As described above, various structures and mechanisms can be adopted for the fixing portion for preventing the co-rotation prevention cartridge C mounted on the insert alignment device 200 from falling off.

Furthermore, the following configurations can be adopted for the technologies described in the embodiments of the present invention.
(1) An insert alignment device including: an upper surface in which an alignment hole for aligning an insert is formed; and a co-rotation prevention member being disposed on a lower layer of the upper surface and coming into contact with an entire periphery of one end of the insert entered into an inner side of the alignment hole.
(2) The insert alignment device according to (1), in which the co-rotation prevention member is formed of an elastomer.
(3) The insert alignment device according to (1) or (2), in which an accommodation portion configured to accommodate a tip portion of an insert inserting tool inserted into the alignment hole to mount the insert is formed in the co-rotation prevention member.
(4) The insert alignment device according to any one of (1) to (3), in which a distance from a front surface of the alignment hole on the upper surface to a surface on which the upper surface and the co-rotation prevention member are in contact with each other is set for each type of the insert as an alignment target.
(5) The insert alignment device according to any one of (1) to (4), in which a wall preventing falling of the insert put in from the upper surface when the insert is put in for alignment is provided around the upper surface.
(6) The insert alignment device according to any one of (1) to (5), in which the upper surface and the co-rotation prevention member are formed to be inclinable when an excess insert having not been entered into the alignment hole is discharged.
(7) The insert alignment device according to (6), in which a portion of the wall is formed to be an opening portion when the excess insert is discharged.
(8) The insert alignment device according to (5), in which the wall is formed to be slidable along a front surface of the upper surface when an excess insert is discharged.
(9) The insert alignment device according to (1), in which the upper surface and the co-rotation prevention member constitute a co-rotation prevention cartridge, and the co-rotation prevention cartridge is formed to be detachably attachable to the insert alignment device.
(10) The insert alignment device according to (9), in which the co-rotation prevention cartridge further includes an adjustment plate being a lower layer of the co-rotation prevention member and sandwiching the co-rotation prevention member between the adjustment plate and the upper surface.
(11) The insert alignment device according to (10), in which, in the co-rotation prevention cartridge, a distance from the upper surface to the adjustment plate is constant regardless of how far a distance from a front surface of the upper surface to the co-rotation prevention member is set according to a type of the insert.
(12) The insert alignment device according to (10) or (11), in which a fixing portion protruding toward a side opposite to a side on which the co-rotation prevention member is disposed is formed in the adjustment plate.
(13) The insert alignment device according to any one of (10) to (12), in which the co-rotation prevention cartridge is mounted on a cartridge reception portion such that the adjustment plate is at a position where the adjustment plate faces a lower surface disposed at an upper portion of a base portion of the insert alignment device, the cartridge reception portion being formed between the lower surface and a wall provided for preventing falling of the insert put in from the upper surface when the insert is put in for alignment.
(14) An insert insertion method using an insert alignment device, the method including: putting an insert into the insert alignment device; aligning the insert by entering the put-in insert into an alignment hole; discharging the insert being aligned and being in excess from the insert alignment device; mounting the aligned insert on an insert inserting tool; and inserting the mounted insert into a workpiece.
(15) The insert insertion method using an insert alignment device according to (14), in which, in the mounting of the insert on the insert inserting tool, the insert inserting tool mounts the insert to press the insert in a traveling direction of the insert inserting tool.
(16) The insert insertion method using an insert alignment device according to (14) or (15), in which, in the inserting of the insert into the workpiece by the insert inserting tool, the insert inserting tool reverses after an insertion time set for each type of the insert to be inserted has elapsed, and ends an insertion operation of the insert into the workpiece.
(17) The insert insertion method using an insert alignment device according to (14) or (15), in which, in the inserting of the insert into the workpiece by the insert inserting tool, the insert inserting tool reverses after the insert is inserted by an insertion distance set in advance, and ends an insertion operation of the insert into the workpiece.
(18) The insert insertion method using an insert alignment device according to any one of (14) to (17), in which the excess insert is discharged from the insert alignment device by opening a portion of a wall formed to surround an upper surface in which the alignment hole is formed in the insert alignment device when the insert alignment device is inclined.
(19) The insert insertion method using an insert alignment device according to any one of (14) to (17), in which the excess insert is discharged from the insert alignment device in a manner that a wall formed to surround an upper surface in which the alignment hole is formed in the insert alignment device slides over the upper surface.
(20) The insert insertion method using an insert alignment device according to any one of (14) to (19), the method further including: in a case where an upper surface and the co-rotation prevention member constitute the co-rotation prevention cartridge and the co-rotation prevention cartridge is made to be detachably attached to the insert alignment device, before the putting of the insert into the insert alignment device, mounting a co-rotation prevention cartridge according to a type of the insert mounted on the insert inserting tool, on a cartridge reception portion of the insert alignment device.

### Reference Signs List

- 1:: insert alignment device
- 10:: alignment portion
- 11:: upper surface
- 111:: alignment hole
- 12:: lower surface
- 13:: co-rotation prevention member
- 131:: accommodation portion
- 20:: base portion
- 21:: placement surface
- 22:: leg
- 2:: feeder
- 3:: recovery device
- 4:: insert inserting tool
- 30:: sealing member
- 31:: sealing member
- 40:: hinge
- 50:: wall
- 51:: opening wall
- 60:: gripping portion
- 70:: cartridge reception portion
- 71:: insertion wall
- 72:: insertion port
- 73:: fitting portion
- 100:: insert alignment device
- 101:: wall
- 200:: insert alignment device
- C:: co-rotation prevention cartridge
- C1:: upper surface
- C2:: co-rotation prevention member
- C3:: adjustment plate
- I:: insert
- S:: insert insertion system

## Claims

1. An insert alignment device comprising:
an upper surface in which an alignment hole for aligning an insert is formed; and
a co-rotation prevention member being disposed on a lower layer of the upper surface coming into contact with an entire periphery of one end of the insert entered into an inner side of the alignment hole.

2. The insert alignment device according to claim 1, wherein the co-rotation prevention member is formed of an elastomer.

3. The insert alignment device according to claim 1, wherein an accommodation portion configured to accommodate a tip portion of an insert inserting tool inserted into the alignment hole to mount the insert is formed in the co-rotation prevention member.

4. The insert alignment device according to claim 1, wherein a distance from a front surface of the alignment hole on the upper surface to a surface on which the upper surface and the co-rotation prevention member are in contact with each other is set for each type of the insert as an alignment target.

5. The insert alignment device according to claim 1, wherein a wall preventing falling of the insert put in from the upper surface when the insert is put in for alignment is provided around the upper surface.

6. The insert alignment device according to claim 1, wherein the upper surface and the co-rotation prevention member are formed to be inclinable when an excess insert having not been entered into the alignment hole is discharged.

7. The insert alignment device according to claim 6, wherein a portion of the wall is formed to be an opening portion when the excess insert is discharged.

8. The insert alignment device according to claim 5, wherein the wall is formed such that the entire wall is slidable along a front surface of the upper surface when the excess insert is discharged.

9. The insert alignment device according to claim 1, wherein the upper surface and the co-rotation prevention member constitute a co-rotation prevention cartridge, and
the co-rotation prevention cartridge is formed to be detachably attachable to the insert alignment device.

10. The insert alignment device according to claim 9, wherein the co-rotation prevention cartridge further includes an adjustment plate being a lower layer of the co-rotation prevention member and sandwiching the co-rotation prevention member between the adjustment plate and the upper surface.

11. The insert alignment device according to claim 10, wherein, in the co-rotation prevention cartridge, a distance from the upper surface to the adjustment plate is constant regardless of how far a distance from a front surface of the upper surface to the co-rotation prevention member is set according to a type of the insert.

12. The insert alignment device according to claim 10, wherein a fixing portion protruding toward a side opposite to a side on which the co-rotation prevention member is disposed is formed in the adjustment plate.

13. The insert alignment device according to claim 10, wherein the co-rotation prevention cartridge is mounted on a cartridge reception portion such that the adjustment plate is at a position where the adjustment plate faces a lower surface disposed at an upper portion of a base portion of the insert alignment device, the cartridge reception portion being formed between the lower surface and a wall provided for preventing falling of the insert put in from the upper surface when the insert is put in for alignment.

14. An insert insertion method using an insert alignment device, the method comprising:
putting an insert into the insert alignment device;
aligning the insert by entering the put-in insert into an alignment hole;
discharging the insert being aligned and being in excess from the insert alignment device;
mounting the aligned insert on an insert inserting tool; and
inserting the mounted insert into a workpiece.

15. The insert insertion method using an insert alignment device according to claim 14, wherein, in the mounting of the insert on the insert inserting tool, the insert inserting tool mounts the insert to press the insert in a traveling direction of the insert inserting tool.

16. The insert insertion method using an insert alignment device according to claim 14, wherein, in the inserting of the insert into the workpiece by the insert inserting tool, the insert inserting tool reverses after an insertion time set for each type of the insert to be inserted has elapsed, and ends an insertion operation of the insert into the workpiece.

17. The insert insertion method using an insert alignment device according to claim 14, wherein, in the inserting of the insert into the workpiece by the insert inserting tool, the insert inserting tool reverses after the insert is inserted by an insertion distance set in advance, and ends an insertion operation of the insert into the workpiece.

18. The insert insertion method using an insert alignment device according to claim 14, wherein, the excess insert is discharged from the insert alignment device by opening a portion of a wall formed to surround an upper surface in which the alignment hole is formed in the insert alignment device when the insert alignment device is inclined.

19. The insert insertion method using an insert alignment device according to claim 14, wherein, the excess insert is discharged from the insert alignment device in a manner that a wall formed to surround an upper surface in which the alignment hole is formed in the insert alignment device slides over the upper surface.

20. The insert insertion method using an insert alignment device according to any one of claims 14 to 19, the method further comprising:
in a case where an upper surface and the co-rotation prevention member constitute the co-rotation prevention cartridge and the co-rotation prevention cartridge is made to be detachably attachable to the insert alignment device,
before the putting of the insert into the insert alignment device,
mounting a co-rotation prevention cartridge according to a type of the insert mounted on the insert inserting tool, on a cartridge reception portion of the insert alignment device.
